# EUROPÄISCHE PATENTSCHRIFT

(11) **EP 2 618 072 B1**
(45) Veröffentlichungstag und Bekanntmachung des Hinweises auf die Patenterteilung: **01.11.2017**
(21) Anmeldenummer: 12000295.1
(22) Anmeldetag: 19.01.2012
(51) Int. Cl.: F24J 2/52

(54) **Solarmodulanordnung sowie Verfahren zur Erstellung der Solarmodulanordnung**
Solar module assembly and method for producing a solar module assembly
Agencement de module solaire ainsi que procédé d'établissement d'un agencement de module solaire

(43) Veröffentlichungstag der Anmeldung: 24.07.2013
(73) Patentinhaber: Roto Frank AG, 70771 Leinfelden-Echterdingen (DE)
(72) Erfinder: Kloepfer, Hannes, 97980 Bad Mergentheim (DE); Lieb, Christian, 97999 Neuses (DE); Wittmann, Dieter, 97980 Apfelbach (DE)
(74) Vertreter: Grosse, Rainer

(56) Entgegenhaltungen:
- EP-A1- 2 187 147
- EP-A2- 2 348 542
- DE-A1-102010 029 820
- DE-U1- 20 204 148
- DE-U1-202008 011 312
- FR-A1- 2 949 799

## Beschreibung

Die Erfindung betrifft eine Solarmodulanordnung gemäß dem Oberbegriff des Anspruchs 1. Bei dem Solarmodul kann es sich um ein Solarthermie-Modul und/oder um ein Fotovoltaikmodul handeln. Eine Solarmodulanordnung mit mindestens einem Solarmodul, Befestigungselementen und einem Bereich einer Montagefläche sind bekannt. Das Solarmodul wird mittels der Befestigungselemente an der Montagefläche befestigt. Handelt es sich bei Montagefläche um ein Dach eines Gebäudes, so sind zwei Anordnungsvarianten zu unterscheiden, nämlich die Anordnung des Solarmoduls in Aufdachanordnung oder in Indachanordnung. Bei dem sogenannten Aufdachsystem befindet sich das Solarmodul oberhalb einer Dacheindeckung, beispielsweise oberhalb von Dachpfannen. Bei dem Indachsystem liegt das Solarmodul im Wesentlichen innerhalb der Dacheindeckungsfläche und bildet selbst ein Eindeckelement, sodass dort, wo sich das Solarmodul befindet, keine Dacheindeckung erforderlich ist.

Aus dem Stand der Technik ist beispielsweise die Druckschrift EP 2 187 147 A1 bekannt. Diese zeigt einen Dachaufbau mit einer Anordnung von Solarpanelen, bei welchem zwischen nebeneinander liegenden Solarpanelen jeweils horizontal verlaufende Befestigungsprofile angeordnet sind. Jedes Befestigungsprofil erstreckt sich unter den Rahmen des jeweils oberen Solarmoduls und über den Rahmen des jeweils unteren Solarmoduls, und sowohl das obere als auch das untere Solarmodul sind am Befestigungsprofil befestigt. So soll eine ziegeldichte Verlegung durch die Befestigungsprofile sichergestellt werden.

Weiterhin sind aus dem Stand der Technik die Druckschriften FR 2 949 799 A1, DE 202 04 148 U1, EP 2 348 542 A2, DE 10 2010 029 820 A1 sowie DE 20 2008 011 312 U1 bekannt.

Der Erfindung liegt die Aufgabe zugrunde, eine kostengünstige und flexibel handhabbare Solarmodulanordnung zu schaffen, wobei insbesondere ein schneller und unkomplizierter Einbau und auch Ausbau von mindestens einem Solarmodul ermöglicht ist, eine flexible Montagereihenfolge gegeben ist, und - bei einer Vielzahl von als Feld rasterartig angeordneten Solarmodulen auch ein einzelnes Solarmodul problemlos entfernbar beziehungsweise austauschbar ist.

Diese Aufgabe wird erfindungsgemäß mittels einer Solarmodulanordnung gelöst, die mindestens ein Solarmodul, mindestens zwei Befestigungselemente, mindestens ein Halteelement und mindestens einen Bereich einer Montagefläche aufweist, wobei jedes der Befestigungselemente mit mindestens einer Einsteckaufnahme sowie mit einer Auflagefläche und das Halteelement mit mindestens einem Einsteckvorsprung versehen ist, das Solarmodul im Bereich einer ersten seiner Stirnseiten das Halteelement mit dem Einsteckvorsprung aufweist, der in die Einsteckaufnahme eines ersten der an der Montagefläche befestigten Befestigungselemente in Richtung oder etwa in Richtung der Erstreckung der Montagefläche eingesteckt angeordnet ist, wobei das Solarmodul mit einem der ersten Stirnseite gegenüberliegenden Unterseitenbereich auf der Auflagefläche des anderen, an der Montagefläche mit Abstand zum ersten Befestigungselement befestigten, zweiten Befestigungselement aufliegt. Weiterhin ist vorgesehen, dass das Solarmodul mit einer der ersten Stirnseite gegenüberliegenden, weiteren, zweiten Stirnseite an einer seitlichen Anlagefläche des zweiten Befestigungselements anliegt, dass der Unterseitenbereich an einer die Dicke des Solarmoduls reduzierenden Stufe des Solarmoduls ausgebildet ist, dass durch die Stufe ein Flachsteg ausgebildet ist, der bereichsweise einen Auflegesteg und einen sich daran anschließenden Überlappungssteg bildet, wobei der Auflegesteg zur Auflage auf die Auflagefläche und der Überlappungssteg zum Überlappen eines Überlappungsbereichs eines benachbarten weiteren Solarmoduls dient und wobei durch die Stufe die zweite Stirnseite ausgebildet ist. Bei der erfindungsgemäßen Solarmodulanordnung sind demzufolge mindestens zwei Befestigungselemente vorgesehen, welche an der Montagefläche beabstandet zueinander befestigt sind. Die erste Stirnseite des Halteelements ist mit dem Halteelement versehen, das den Einsteckvorsprung aufweist. Der Einsteckvorsprung erstreckt sich in einer Ebene, die in der Ebene oder parallel zur Ebene des Solarmoduls verläuft. Insbesondere verläuft die Längserstreckung des Einsteckvorsprungs rechtwinklig zur Fläche der ersten Stirnseite des Solarmoduls. Bei der Montage der Solarmodulanordnung wird das Solarmodul derart gehandhabt, dass der Einsteckvorsprung in die Einsteckaufnahme des ersten, an der Montagefläche befestigten Befestigungselements eingesteckt wird. Dieses Einstecken erfolgt in Richtung oder etwa in Richtung der Erstreckung der Montagefläche. "Etwa in Richtung" bedeutet, dass zwischen der Fläche oder Ebene des Solarmoduls und der Montagefläche oder Montageebene während des Einsteckvorgangs ein spitzer Winkel eingeschlossen sein kann. Ist das Einstecken erfolgt oder noch während des Einsteckvorgangs oder noch vor dem Einstecken, wird das Solarmodul abgelegt, wobei es mit seinem Unterseitenbereich auf der Auflagefläche des anderen, mit Abstand zum ersten Befestigungselement liegenden, zweiten Befestigungselement aufliegt. Ein Anteil des Gewichts des Solarmoduls lastet demzufolge auf der Auflagefläche des zweiten Befestigungselements, das die Gewichtskraft an die Montagefläche, also im Falle eines Dachs auf eine Dachkonstruktion, ableitet. Demzufolge lastet das Solarmodul nicht auf einem gegebenenfalls benachbart angeordneten, weiteren Solarmodul, sondern das Gewicht des Solarmoduls wird einerseits über den Einsteckvorsprung und das erste Befestigungselement von der Montagefläche und über die Auflagefläche und das zweite Befestigungselement ebenfalls von der Montagefläche aufgenommen. Auch bei einer geschuppten, also einer teilweise überlappenden Anordnung von mehreren Solarmodulen ist auf diese Art und Weise ein problemloses Demontieren zum Beispiel eines der Solarmodule ermöglicht, ohne dass dazu die anderen Solarmodule gelöst oder entfernt werden müssen. Die durch die erfindungsgemäße Konstruktion bewirkte einfache Montage- beziehungsweise Demontagemöglichkeit, nämlich Einstecken des Einsteckvorsprungs in die Einsteckaufnahme eines Befestigungselements und Ablegen des Solarmoduls auf die Auflagefläche eines benachbarten Befestigungselements beziehungsweise Abheben eines Solarmoduls von der Auflagefläche und Herausziehen des Einsteckvorsprungs aus der Einsteckaufnahme des benachbarten Befestigungselements, ist eine sehr einfache und unkomplizierte Handhabung ermöglicht. Sollen mehrere Solarmodule im Verbund, also in teilweise Überlappungsanordnung, montiert oder demontiert werden, so ist aufgrund der erfindungsgemäßen Befestigung der einzelnen Solarmodule keine Montage- beziehungsweise Demontagereihenfolge gegeben, sondern es kann flexibel gearbeitet werden, beispielsweise bei einer als Schrägdach ausgebildeten Montagefläche von oben nach unten oder von unten nach oben und dabei von rechts nach links oder von links nach rechts, wobei alle Kombinationen möglich sind. Hinsichtlich der "Montagefläche" der Erfindung kann es sich um jedwede Fläche handeln, insbesondere um eine Dachfläche oder eine Fassadenfläche eines Gebäudes oder dergleichen. Bei der Solarmodulanordnung der Erfindung handelt es sich insbesondere um ein Indachsystem, d.h., die Montagefläche ist eine Dachfläche, beispielsweise eine Schrägdachfläche, wobei jedes Solarmodul einen entsprechenden Bereich einer Dacheindeckung ersetzt, sodass Kosten für die Dacheindeckung eingespart werden. Die Erfindung ist jedoch nicht auf ein Indachsystem beschränkt, sondern kann auch bei Aufdachsystemen verwendet werden. Im letztgenannten Fall befindet sich die Montagefläche der erfindungsgemäßen Solarmodulanordnung oberhalb einer vorzugsweise bestehenden Dacheindeckung. In jedem Fall muss es sich bei der Montagefläche nicht um eine geschlossene Fläche handeln, sondern es sind einzelne, in einer theoretischen Fläche liegende "Stützpunkte" (zum Beispiel auf Dachlatten) ausreichend, um die Befestigungselemente festzulegen. Im Zusammenhang mit dem Montieren oder Demontieren eines Solarmoduls ist ferner stets zu beachten, dass die Vorgehensweise - wie nachstehend erwähnt - unterschiedlich sein kann. So ist es beispielsweise möglich, erst das Solarmodul auf die Auflagefläche des zweiten Befestigungselements aufzulegen und dann über diese Fläche zu schieben bis der Einsteckvorsprung in die Einsteckaufnahme des ersten Befestigungselements gelangt. Entsprechend umgekehrt kann bei der Demontage vorgegangen werden. Es ist ferner möglich, den Einsteckvorsprung bei der Montage teilweise in die Einsteckaufnahme des ersten Befestigungselements einzustecken, das Solarmodul dann auf die Auflagefläche des zweiten Befestigungselements aufzulegen und anschließend entlang der Auflagefläche zu verschieben, sodass der Einsteckvorsprung in vorgegebener Länge in die Einsteckaufnahme eintritt. In entsprechend umgekehrter Weise kann auch bei der Demontage vorgegangen werden. Schließlich ist es auch denkbar, dass zunächst der Einsteckvorsprung des Solarmoduls in vorgegebener Länge in die Einsteckaufnahme des ersten Befestigungselements eingesteckt und anschließend das Solarmodul auf die Auflagefläche des zweiten Befestigungselements aufgelegt wird, ohne dass es dabei verschoben wird. Auch dieses kann in umgekehrter Weise bei der Demontage erfolgen. Alle aufgezählten Möglichkeiten sind bei der erfindungsgemäßen Ausgestaltung eingeschlossen.

Nach einer Weiterbildung der Erfindung ist - wie bereits erwähnt - vorgesehen, dass die Montagefläche eine Dachfläche, insbesondere eine Schrägdachfläche, ist. Bevorzugt wird das mindestens eine Solarmodul in das Dach eines Gebäudes oder dergleichen eingebaut. Im Falle einer Schrägdachfläche wird vorzugsweise derart vorgegangen, dass das erste Befestigungselement in einer höheren Position, also in Richtung Giebel des Dachs, und dass das zweite Befestigungselement in einer tieferen Position, also in Richtung Traufe des Dachs angeordnet ist, sodass das Einstecken des Einsteckvorsprungs in einer Richtung erfolgt, die in etwa in Richtung des Giebels weist. Demzufolge befindet sich bevorzugt das erste Befestigungselement in einem höherliegenden Bereich der Montagefläche, insbesondere Schrägdachfläche, und das zweite Befestigungselement in einem tieferliegenden Bereich der Montagefläche, insbesondere Schrägdachfläche. Erfindungsgemäß ist vorgesehen, dass das Solarmodul mit einer der ersten Stirnseite gegenüberliegenden, weiteren, zweiten Stirnseite an einer seitlichen Anlagefläche des zweiten Befestigungselements anliegt.

Diese zweite Stirnseite, die insbesondere an den Unterseitenbereich des Solarmoduls angrenzt, stützt demzufolge das Solarmodul ab, was insbesondere bei Schrägdachflächen von Vorteil ist, da dann verhindert wird, dass das Solarmodul vor der eigentlichen Festlegung (insbesondere Festschrauben) nach unten rutscht, wodurch der Einsteckvorsprung aus der Einsteckaufnahme des ersten Befestigungselements herausrutschen könnte. Durch das Abstützten der zweiten Stirnseite des Solarmoduls an der seitlichen Anlagefläche des zweiten Befestigungselements wird die Montage wesentlich vereinfacht, da nach dem Ablegen des Solarmoduls nicht gleich seine Befestigung erfolgen muss. Vielmehr hält sich das Solarmodul aufgrund seiner Gewichtskraft selbsttätig durch die Abstützung, sodass nicht sofort eine Befestigung des Solarmoduls erforderlich ist. Während des Befestigungsschritts ist es daher nicht notwendig, das Solarmodul händisch festzuhalten.

Eine bevorzugte Ausführungsform der Erfindung sieht vor, dass mindestens eines der Befestigungselemente, insbesondere das zweite Befestigungselement, derart ausgebildet und derart relativ zu mindestens einem anderen der Befestigungselemente, insbesondere zum ersten Befestigungselement, an der Montagefläche befestigt ist, dass in seine Einsteckaufnahme der Einsteckvorsprung eines weiteren Halteelements einsteckbar/eingesteckt ist, das an einem weiteren Solarmodul im Bereich von dessen erster Stirnseite angeordnet ist. Hierbei handelt es sich somit um mindestens zwei Solarmodule, die stirnseitig nebeneinander angeordnet werden. Handelt es sich um eine schräge Montagefläche, beispielsweise um ein Schrägdach, so kann nach Montage eines ersten Solarmoduls problemlos die Montage eines zweiten Solarmoduls erfolgen, da das montierte erste Solarmodul nicht die Einsteckaufnahme des Befestigungselements abdeckt, auf dem es mit seinem Unterseitenbereich aufliegt. Diese frei zugängliche Einsteckaufnahme des entsprechenden Befestigungselements ermöglicht es somit, dort den Einsteckvorsprung eines Halteelements einzustecken, das sich an dem zweiten Solarmodul befindet, obwohl das erste Solarmodul bereits montiert ist. Unabhängig davon ist gleichwohl die Möglichkeit geschaffen, dass das erste Solarmodul teilweise überlappend (geschuppt) zum zweiten Solarmodul verläuft, um eine vorzugsweise niederschlagsdichte Anordnung zu schaffen. Regenwasser und dergleichen läuft somit von der Oberfläche des ersten Solarmoduls auf die Oberfläche des zweiten Solarmoduls und nicht zwischen die Solarmodule.

Insbesondere ist vorgesehen, dass an jedem der Befestigungselemente die Auflagefläche oberhalb der Einsteckaufnahme ausgebildet ist. Hierdurch deckt ein auf der Auflagefläche aufliegendes Solarmodul die Einsteckaufnahme desselben Befestigungselements seitlich nicht ab, sodass eine Zugänglichkeit für das Einstecken eines Einsteckvorsprungs eines weiteren Solarmoduls besteht. Gemäß der Erfindung ist vorgesehen, dass der Unterseitenbereich an einer die Dicke des Solarmoduls reduzierenden Stufe des Solarmoduls ausgebildet ist. Eine Stufenfläche dieser Stufe bildet vorzugsweise diesen Unterseitenbereich, wobei die weitere Stufenfläche der Stufe vorzugsweise die zweite Stirnseite des Solarmoduls bildet. Erfindungsgemäß wird durch die Stufe ein Flachsteg ausgebildet, der bereichsweise einen Auflegesteg und einen sich daran anschließenden Überlappungssteg bildet, wobei der Auflegesteg an seiner Unterseite den Unterseitenbereich bildet und zur Auflage auf die Auflagefläche eines entsprechenden Befestigungselements dient und der Überlappungssteg ein Überlappen eines Überlappungsbereichs eines benachbarten weiteren Solarmoduls vornimmt. Demzufolge wird das entsprechende Befestigungselement somit von dem Flachsteg überfangen, wobei die Stufe eine seitliche sowie grundrissseitige Abstützung an dem entsprechenden Befestigungselement ermöglicht. Durch den Überlappungssteg ist eine geschuppte Anordnung von stirnseitig benachbart angeordneten Solarmodulen ermöglicht, um einen Wind- und/oder Feuchtigkeitseintritt zu verhindern. Gemäß der Erfindung ist vorgesehen, dass die Stufe die zweite Stirnseite ausgebildet. Auf diese Tatsache wurde bereits vorstehend hingewiesen.

Eine Weiterbildung der Erfindung sieht vor, dass jedes Solarmodul zwei einander gegenüberliegende Längsseiten aufweist, wobei die eine Längsseite eine Überlappungszunge für ein Überlappen eines Bereichs eines seitlich benachbarten Solarmoduls aufweist und wobei die andere Längsseite einen Seitenrandbereich mit hochstehendem Barrieresteg aufweist, der - im Falle des Vorhandenseins eines benachbarten Solarmoduls - von dessen Überlappungszunge überlappt ist. Damit ist auch eine seitliche Schuppung, also ein teilweises Überlappen von längsseitig nebeneinander angeordneten Solarmodulen gegeben, wobei zusätzlich eine Barriere gegenüber aufsteigendem Wasser durch den erwähnten hochstehenden, insbesondere senkrecht stehenden, Barrieresteg gebildet ist. Aufsteigendes Wasser ergibt sich beispielsweise durch Windbeaufschlagung von Feuchtigkeit, die - aufgrund des von der Überlappungszunge überlappten Barrierestegs auf eine Labyrinthanordnung stößt und dadurch an einem Eindringen gehindert ist.

Insbesondere kann vorgesehen sein, dass sich die Überlappungszunge - ausgehend von einer im Bereich der ersten Stirnseite liegenden Ausklinkung - entlang der Längsseite des Solarmoduls bis zum Ende des Flachstegs beziehungsweise Überlappungsstegs erstreckt. Ferner ist bevorzugt vorgesehen, dass sich der Seitenrandbereich - ausgehend von einer im Bereich der zweiten Stirnseite liegenden Gegenausklinkung - bis zu der ersten Stirnseite über die Längsseite des Solarmoduls erstreckt. Ferner ist vorzugsweise vorgesehen, dass - ausgehend von der ersten Stirnseite - über eine Länge, die so groß ist oder etwa so groß ist wie die Länge des Überlappungsstegs, kein Barrieresteg am Seitenrandbereich ausgebildet ist. Vorzugsweise kann ferner vorgesehen sein, dass aufgrund der Gegenausklinkung der Seitenrandbereich zwischen dem Ende des Auflegestegs und dem Ende des Überlappungsstegs endet. Aufgrund der vorstehend erwähnten Maßnahmen wird ein Eckbereich, an dem vier benachbart zueinander angeordnete Solarmodule zusammentreffen, optimal gegenüber Witterungseinflüssen überlappend zueinander geschlossen, wobei vorzugsweise in dieser Zone kein Barrieresteg vorhanden ist, sodass die einzelnen Teile der Solarmodule eng aufeinanderliegen können.

Nach einer Weiterbildung der Erfindung ist vorgesehen, dass vom Seitenrandbereich mindestens eine erste Dichtung ausgeht, die - im Falle des Vorhandenseins eines benachbarten Solarmoduls - an dessen Unterseite seine Überlappungszunge anliegt. Diese erste Dichtung bildet einen zusätzlichen Schutz entgegen Wind und Niederschlag.

Ferner ist vorgesehen, dass vom Überlappungsbereich mindestens eine zweite Dichtung ausgeht die - im Falle des Vorhandensein eines benachbarten Solarmoduls - an dessen Unterseite seines Überlappungsstegs anliegt. Auch hierdurch ist ein Wind- und Niederschlagsschutz gewährleistet.

Insbesondere ist vorgesehen, dass die Solarmodulanordnung mehrere Solarmodule aufweist, die im Verbund, also geschuppt zueinander, insbesondere stirnseitig geschuppt und vorzugsweise auch längsseitig geschuppt zueinander, angeordnet sind, wobei insbesondere mindestens vier in einem derartigen Verbund angeordnete Solarmodule vorgesehen sind, mit mindestens sechs Befestigungselementen, mindestens vier Halteelementen und mindestens einem Bereich einer Montagefläche, wobei jeweils mindestens zwei Solarmodule längsseitig nebeneinander angeordnet sind und eine Reihe bilden und die mindestens zwei Reihen stirnseitig nebeneinander angeordnet sind.

Vorstehend wurde auf eine minimale Anzahl von Befestigungselementen und Halteelementen eingegangen. Selbstverständlich ist es auch möglich, dass an einem Solarmodul nicht nur ein Halteelement angeordnet ist, sondern dass dort - insbesondere über die erste Stirnseite verteilt - mehrere, insbesondere zwei, Halteelemente angeordnet sind. Dementsprechend werden auch mehrere Befestigungselemente vorgesehen, um die Einsteckvorsprünge aufnehmen zu können.

Wie bereits angedeutet, handelt es sich bei der erfindungsgemäßen Solarmodulanordnung bevorzugt um eine Ausbildung als Indachsystem.

Die Erfindung betrifft ferner ein Verfahren zur Erstellung einer Solarmodulanordnung gemäß mindestens einer der vorstehenden Ausführungen, mit mindestens einem Solarmodul, mindestens zwei Befestigungselementen, mindestens einem Halteelement und mindestens einem Bereich einer Montagefläche, wobei jedes der Befestigungselemente mit mindestens einer Einsteckaufnahme sowie mit einer Auflagefläche und das Halteelement mit mindestens einem Einsteckvorsprung versehen ist, wobei
- das Halteelement an dem Solarmodul im Bereich einer ersten seiner Stirnseiten befestigt wird,
- ein erstes der Befestigungselemente an der Montagefläche befestigt wird und ein zweites der Befestigungselemente mit Abstand zum ersten Befestigungselement ebenfalls an der Montagefläche befestigt wird,
- das Solarmodul derart gehandhabt wird, dass der Einsteckvorsprung des Halteelements in die Einsteckaufnahme des ersten Befestigungselements in Richtung oder etwa in Richtung der Erstreckung der Montagefläche eingesteckt wird,
- das Solarmodul insbesondere anschließend mit einem der ersten Stirnseite gegenüberliegenden Unterseitenbereich auf die Auflagefläche des anderen Befestigungselements abgelegt wird und
- anschließend - gegebenenfalls nach geringfügigen Positionskorrekturen des Solarmoduls relativ zur Montagefläche - das Solarmodul an dem zweiten Befestigungselement und/oder an der Montagefläche befestigt wird.

Die erwähnten, geringfügigen Positionskorrekturen des Solarmoduls relativ zur Montagefläche sind nur dann erforderlich, wenn durch die Befestigungselemente beziehungsweise das Halteelement keine oder noch keine allseitige reproduzierbare Abstützung realisiert ist. Unterschiedliche Einstecktiefen des Einsteckvorsprungs in die Einsteckaufnahme führt zu entsprechend unterschiedlichen Positionen des Solarmoduls relativ zur Montagefläche. Erst dann, wenn die Ausführungsform der Solarmodulanordnung eine zweite Stirnseite am Solarmodul und die seitliche Anlagefläche am Befestigungselement vorsieht ist die Positionierung im Hinblick auf die Einstecktiefe maßlich genau vorgegeben. Vorzugsweise wird bei der Montage derart vorgegangen, dass zunächst der Einsteckvorsprung so tief wie möglich in die Einsteckaufnahme eingesteckt wird und dass dann der Flachsteg des Solarmoduls auf die Auflagefläche des anderen Befestigungselements aufgelegt wird. Anschließend erfolgt dann eine Verlagerung des Solarmoduls derart, dass die zweite Stirnseite gegen die seitliche Anlagefläche tritt. Dabei rutscht der Einsteckvorsprung ein Stück weit in der Einsteckaufnahme zurück. Im Falle eines Schrägdachs erfolgt dieses "Zurückrutschen" selbsttätig durch das Eigengewicht des Solarmoduls. Das Solarmodul richtet sich daher selbsttätig in die reproduzierbare Montageposition aus. Der Einsteckvorsprung wird in der Einsteckaufnahme seitlich geführt, mit der Folge, dass die Seitenposition des Solarmoduls auf der Montagefläche dadurch reproduzierbar vordefiniert ist.

Die Zeichnungen veranschaulichen die Erfindung anhand eines Ausführungsbeispiels und zwar zeigt:
- Figur 1: eine Solarmodulanordnung mit insgesamt neun, feldartig montierten Solarmodulen als Indachsystem auf einem Schrägdach eines Gebäudes,
- Figur 2: eine Teilansicht zweier seitlich benachbarter Solarmodule im Bereich ihrer vorderen, ersten Stirnseiten,
- Figur 3: eine der Figur 2 entsprechende Ansicht, jedoch im Bereich ihrer hinteren, zweiten Stirnseiten,
- Figur 4: eine perspektivische Ansicht eines Halteelements zur Befestigung eines Solarmoduls,
- Figur 5: eine perspektivische Ansicht eines Befestigungselements, das der Befestigung eines Solarmoduls dient,
- Figur 6: eine Draufsicht auf das Befestigungselement der Figur 5,
- Figur 7: eine Schnittansicht durch eine ineinandergesteckte Anordnung von einem Einsteckvorsprung des Halteelements und dem Befestigungselement,
- Figur 8: eine schematische Schnittansicht entlang der Längserstreckung der Solarmodulanordnung,
- Figur 9: einen Bereich einer Montagefläche zur Befestigung von Solarmodulen, wobei die Montagefläche mit mehreren Befestigungselementen versehen ist,
- Figur 10: eine Darstellung von Montagearbeiten beim Aufbau der Solarmodulanordnung,
- Figur 11: einen Eckbereich von vier aneinandergrenzenden Solarmodulen der Solarmodulanordnung in schematischer Darstellung,
- Figur 12: einen Querschnitt durch einen Stoßbereich von seitlich aneinandergrenzenden Solarmodulen der Solarmodulanordnung,
- Figur 13: einen Längsschnitt durch einen Stoßbereich von stirnseitig aneinandergrenzenden Solarmodulen der Solarmodulanordnung.

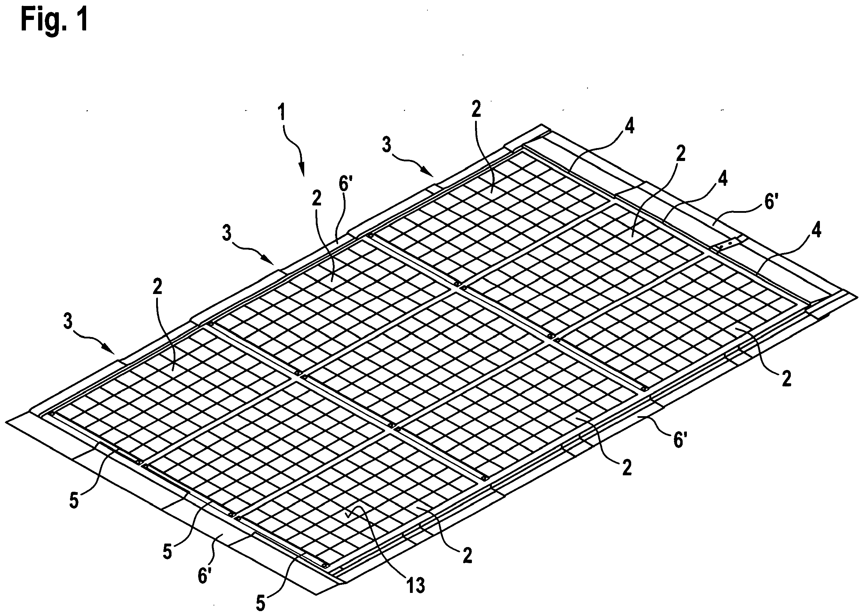

Die Figur 1 zeigt eine Solarmodulanordnung 1, die insgesamt neun Solarmodule 2 umfasst, die feldartig angeordnet sind, derart, dass jeweils drei seitlich benachbart zueinander liegende Solarmodule 2 eine Reihe 3 bilden, wobei drei Reihen stirnseitig benachbart zueinander angeordnet sind. Die Anordnung ist selbstverständlich beispielhaft, d.h., die Anzahl der Solarmodule 2 pro Reihe beziehungsweise die Anzahl der aneinandergrenzenden Reihen ist jeweils frei wählbar. Die Anordnung ist vorzugsweise derart getroffen, dass die sich vorzugsweise an einem Dach, insbesondere Schrägdach eines Gebäudes oder dergleichen, befindliche Solarmodulanordnung 1 geneigt verläuft, wobei erste Stirnseiten 4 der Solarmodule 2 jeder Reihe 3 in Richtung auf den nicht dargestellten Giebel des Daches und entgegengesetzt zu den ersten Stirnseiten 4 liegende Enden 5 der Solarmodule 2 jeder Reihe 3 in Richtung einer nicht dargestellten Traufe des Schrägdachs weisen. Der Figur 1 ist ferner zu entnehmen, dass die gesamte Solarmodulanordnung 1 mit einer aus einer Vielzahl von Blechen bestehenden Anschlusseinrichtung 6' versehen ist, um gegenüber der übrigen Dacheindeckung des Schrägdachs eine wind- und wasserdichte Verbindung zu schaffen. Die einzelnen Solarmodule 2 der Solarmodulanordnung 1 sind vorzugsweise derart gestaltet und angeordnet, dass sich stirnseitig benachbarte Solarmodule teilweise überlappen, um einen Eindringschutz zu schaffen, d.h., ein höher liegendes Solarmodul 2 endet teilweise überlappend oberhalb eines tiefer liegenden Solarmoduls 2. Ferner besteht auch eine Überlappung von seitlich aneinandergrenzenden Solarmodulen, um auch hier einen Wind- und Feuchtigkeitsschutz zu erzielen. Auf die Überlappungssituationen (geschuppte Anordnungen) wird nachstehend noch näher eingegangen.

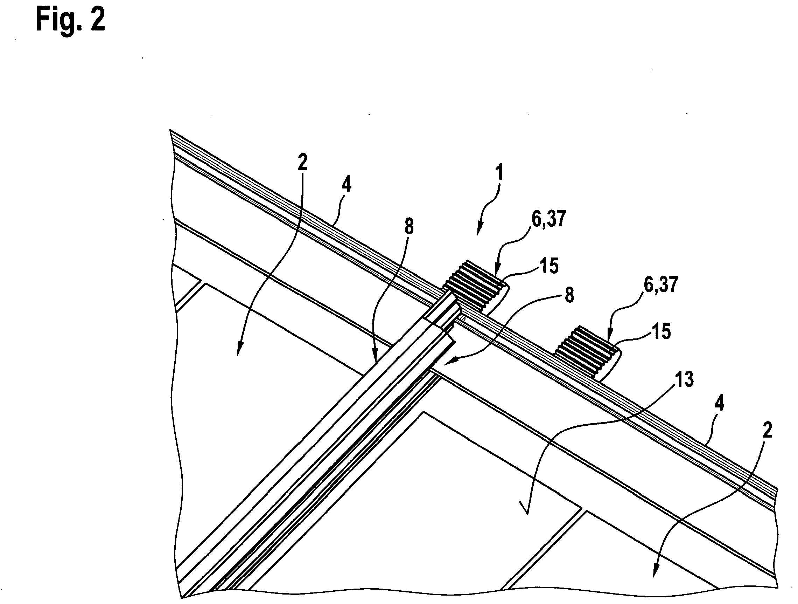

Gemäß Figur 2 sind an den ersten Stirnseiten 4 der Solarmodule jeweils zwei beabstandet zueinander liegende Halteelemente 6 angeordnet, wobei die Figur 2 nur jeweils ein Halteelement 6 pro Solarmodul 2 zeigt. Das jedem der Solarmodule 2 zugeordnete weitere Halteelement 6 ist im anderen Seitenbereich an der ersten Stirnseite 4 befestigt.

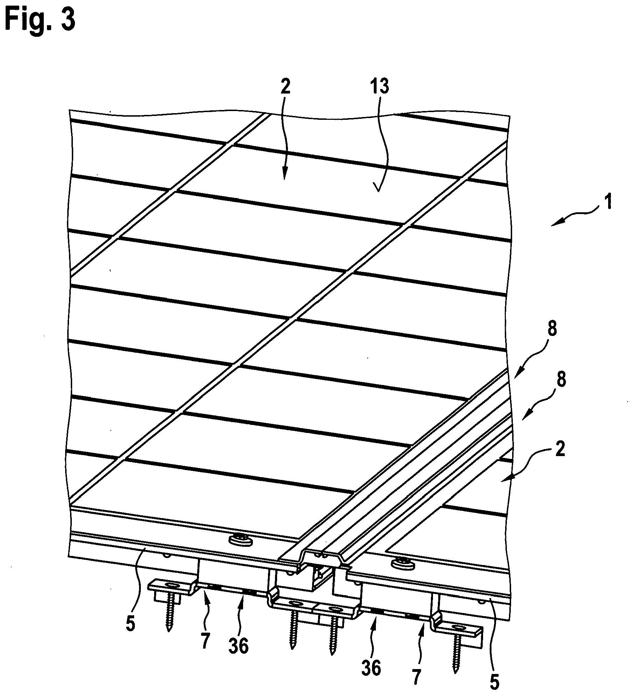

Entsprechend der Figur 2 sind gemäß Figur 3 im Bereich der Enden 5 der Solarmodule jeweils zwei Befestigungselemente 7 angeordnet, wobei - ebenso wie bei der Darstellung der Figur 2 - aus der Figur 3 nur jeweils ein Befestigungselement 7 pro Solarmodul 2 ersichtlich ist. Das zu jedem Solarmodul 2 zugehörige weitere Befestigungselement 7 befindet sich in entsprechender Weise in dem jeweiligen anderen, aus der Figur 3 nicht ersichtlichen Seitenbereich des zugehörigen Solarmoduls 2. Die Halteelemente 6 und Befestigungselemente 7 sind - in Längsrichtung der Solarmodule 2 betrachtet - fluchtend zueinander angeordnet.

Aus alledem ergibt sich, dass jedes Solarmodul 2 im vorderen Bereich zwei mit Abstand zueinander liegende Halteelemente 6 aufweist, die jeweils geringfügig beabstandet zur zugehörigen Längsseitenkante 8 jedes Solarmoduls 2 liegen, und dass im hinteren Bereich jedes Solarmoduls 2 in entsprechender Weise zwei beabstandet zueinander liegende Befestigungselemente 7, ebenfalls geringfügig beabstandet von der zugehörigen Längsseitenkante 8, angeordnet sind.

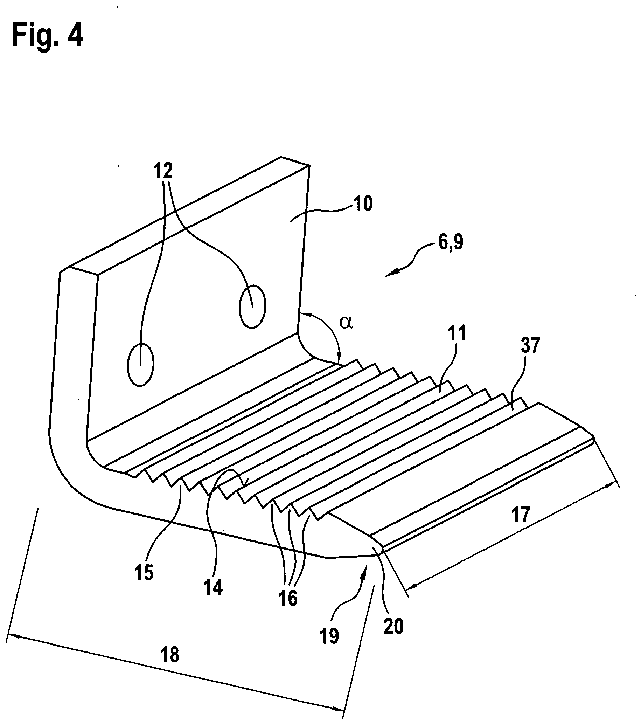

Nachfolgend soll zunächst auf den konstruktiven Aufbau des jeweiligen Halteelements 6 und des jeweiligen Befestigungselements 7 eingegangen werden. Die Figur 4 zeigt in perspektivischer Darstellung ein Halteelement 6, das im Wesentlichen die Form eines Haltewinkels 9 aufweist. Das Halteelement 6 besteht vorzugsweise aus Metall, insbesondere aus Aluminium. Bevorzugt ist es als Aluminiumprofil, insbesondere im Strangpressverfahren, hergestellt. Handelt es sich um ein Strangpressprofil, so wird dieses in Streifen zerschnitten, wodurch die Haltewinkel 9 entstehen.

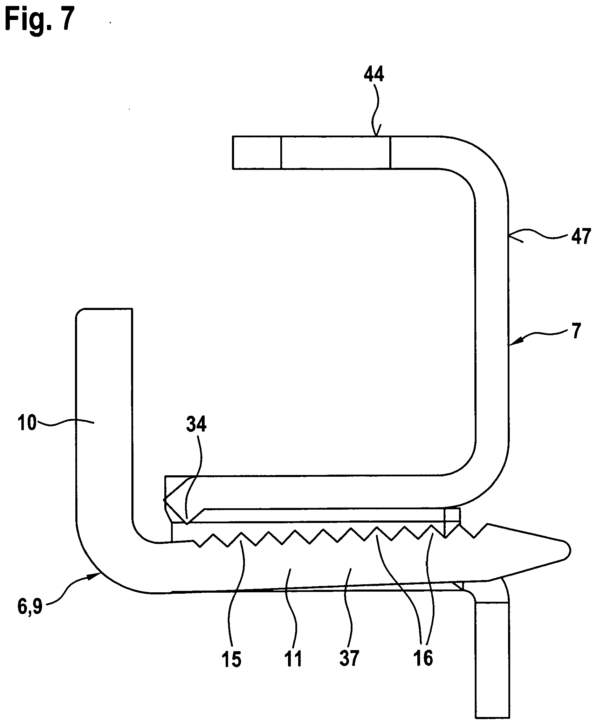

Das Halteelement 6 weist gemäß Figur 4 einen Montageschenkel 10 und einen Einsteckschenkel 11 auf. Der Einsteckschenkel 11 bildet einen Einsteckvorsprung 37. Der Winkel α zwischen Montageschenkel und Einsteckschenkel 11 beträgt vorzugsweise 90° oder ist etwas kleiner als 90°, vorzugsweise zwischen 85° und 90° groß. Der Montageschenkel 10 ist mit zwei Durchgangslöchern 12 versehen, in die Befestigungsschrauben (nicht in Figur 4 dargestellt) eingesteckt werden können, um das Halteelement 6 an der ersten Stirnseite 4 des zugehörigen Solarmoduls 2 zu befestigen. In der befestigten Situation ragt demzufolge der Einsteckschenkel 11 als Einsteckvorsprung 37 von der ersten Stirnseite 4 des Solarmoduls 2 vor, so wie dies bei den beiden Solarmodulen 2 der Figur 2 ersichtlich ist. Der Einsteckvorsprung 37 liegt demzufolge in einer Ebene, die parallel zur Oberseitenebene 13 (Figur 2) liegt. Der Einsteckschenkel 11 steht demzufolge senkrecht auf der ersten Stirnseite 4, sofern der Winkel α = 90° beträgt. Ist der Winkel α etwas kleiner als 90°, so ergibt sich eine dementsprechende Situation. Der Einsteckvorsprung 37 ist an seiner Oberseite 14 mit einer Zahnung 15 versehen, die aus einer Vielzahl von im Querschnitt (Figur 7) vorzugsweise dreieckförmigen Zähnen 16 besteht. Jeder Zahn 16 erstreckt sich über die gesamte Breite 17 des Einsteckschenkels 11. Über die Länge 18 des Einsteckschenkels 11 gesehen, geht die Zahnung 15 im Bereich des freien Endes 19 des Einsteckschenkels 11 in einen Einführkeil 20 über.

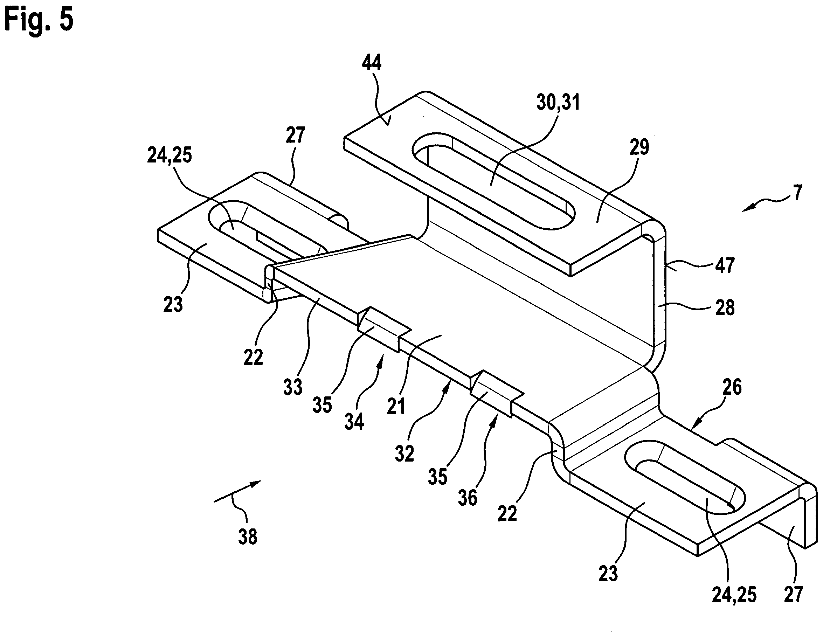

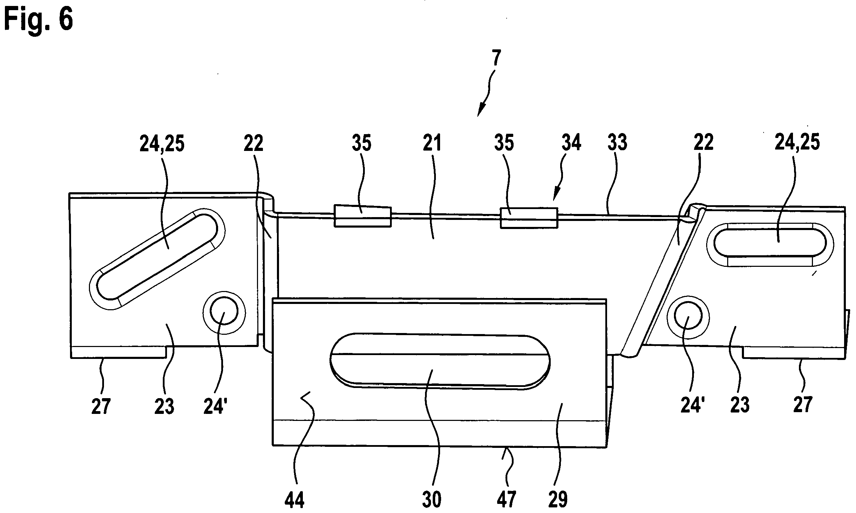

Die Figuren 5 und 6 zeigen verschiedene Ansichten des Befestigungselements 7. Das Befestigungselement 7 besteht vorzugsweise aus Metall, insbesondere aus Metallblech, vorzugsweise Aluminiumblech. Es wird insbesondere im Stanz-Biege-Verfahren hergestellt. Es ist bevorzugt einstückig ausgebildet. Das Befestigungselement 7 weist einen Mittelsteg 21 auf, von dem - an beiden Seiten - jeweils ein Tragsteg 22 nach unten abgebogen ist, der jeweils in einen horizontal abgebogenen Befestigungssteg 23 übergeht. Jeder Befestigungssteg 23 weist ein Befestigungsloch 24 in Form eines Langlochs 25 auf. Von jedem Befestigungssteg 23 geht im Bereich der Vorderseite 26 des Befestigungselements 7 im Wesentlichen rechtwinklig nach unten ein Anschlagsteg 27 aus. Von der erwähnten Vorderseite 26 des Befestigungselements 7 geht von dem Mittelsteg 21 nach oben ein Stützsteg 28 aus, der in einen horizontal abgebogenen Dachsteg 29 übergeht. Der Winkel zwischen dem Mittelsteg 21 und dem Stützsteg 28 beträgt vorzugsweise 90°. Der Winkel zwischen dem Stützsteg 28 und dem Dachsteg 29 beträgt ebenfalls vorzugsweise 90°. Insgesamt bilden Mittelsteg 21, Stützsteg 28 und Dachsteg 29 ein auf der Seite liegendes U. Der Dachsteg 29 ist mit einer Befestigungsöffnung 30 in Form eines Langlochs 31 versehen. Die an der Rückseite 32 des Befestigungselements 7 liegende Kante 33 des Mittelstegs 21 ist mit einer Gegenzahnung 34 versehen, die vorzugsweise aus zwei, beabstandet zueinander liegenden Gegenzähnen 35 besteht, welche insbesondere durch Stanzung erzeugt sind. Die Breite der beiden Gegenzähne 35 zusammen beträgt nur einen Bruchteil (⅓ bis ¼) der kleinsten Breitenabmessung des Mittelstegs 21. Gemäß Figur 6 verläuft einer der beiden Tragstege 22 (in der Figur 6 der rechts liegende Tragsteg 22) schräg zur Kante 33, während der andere Tragsteg 22 rechtwinklig zur Kante 33 verläuft. Die ein umgekehrtes U bildende Anordnung der beiden Tragstege 22 und des Mittelstegs 21 führt zur Ausbildung einer Einsteckaufnahme 36, die - gemäß Figur 6 - aufgrund des schräg verlaufenden Tragstegs 22 sich in Richtung (insbesondere Einsteckrichtung) auf den Stützsteg 28 seitlich verjüngt. Die kleinste Breitenabmessung der Einsteckaufnahme 36 ist geringfügig größer als die Breite 17 des Einsteckvorsprungs 37 des Halteelements 6. Die Einsteckaufnahme 36 weist eine Höhe auf (Abstand zwischen der Unterseite des Mittelstegs 21 und der Unterseite der Befestigungsstege 23, die größer ist, als die Dicke des Einsteckschenkels 11, wobei sich diese Dicke unter Einbeziehung der Zahnhöhen der Zähne 16 bemisst. Ein Vergleich der Figuren 5 und 6 zeigt, dass diese beiden Figuren keine identisch gleichen Befestigungselemente 7 zeigen, da neben den beiden Langlöchern 25 beim Ausführungsbeispiel der Figur 6 auch noch kreisförmige Befestigungslöcher 24' vorgesehen sind und die Lage der Langlöcher 25 bei den Bauformen der Figuren 5 und 6 voneinander abweicht. Ansonsten sind die Befestigungselemente 7 der Figuren 5 und 6 jedoch gleich ausgebildet.

Im Innern des vom Mittelsteg 21, Stützsteg 28 und Dachsteg 29 gebildeten U's ist ein Materialklotz, beispielsweise aus Holz, angeordnet (in den Figuren 5 und 6 nicht gezeigt), um eine die Befestigungsöffnung 30 durchgreifende Gewindeschraube, insbesondere Holzschraube, einschrauben zu können. Dies ist zur Befestigung eines Solarmoduls 2 erforderlich, das - wie nachstehend noch näher gezeigt werden wird - auf dem Dachsteg 29 aufliegt. Demzufolge bildet die Oberseite des Dachstegs 29 eine Auflagefläche 44 für ein Solarmodul 2.

Die Figur 7 verdeutlicht eine Festlegung eines Solarmoduls 2 (das Solarmodul ist jedoch in Figur 7 nicht dargestellt). Die Festlegung des Solarmoduls 2 erfolgt an einer Montagefläche (ebenfalls in Figur 7 nicht dargestellt). Auf die Befestigung des Halteelements 6 am Solarmodul 2 wurde bereits eingegangen. Die Befestigung des Befestigungselements 7 an der Montagfläche beziehungsweise eines Bereichs der Montagefläche wird nachstehend noch näher erläutert. Es wird daher zunächst mal lediglich angenommen, dass das Befestigungselement 7 an der Montagefläche, insbesondere an einem Dach, vorzugsweise an einer Schrägdachfläche, montiert ist und dass ein Solarmodul 2 mit einem Halteelement 6 an seiner ersten Stirnseite 4 bestückt wurde. Wird nun - zur Montage des Solarmoduls 2 an der Montagefläche - das Solarmodul 2 derart gehandhabt, dass der Einsteckvorsprung 37 in die Einsteckaufnahme 36 eintritt (Pfeil 38 in Figur 5), so ergibt sich die Darstellung der Figur 7. Die Einsteckaufnahme 36, die einerseits von Bereichen des Befestigungselements 7 und andererseits auch von einem Teil der Montagefläche begrenzt wird, bildet einen Aufnahmekanal, der mit geringfügigem Seitenspiel und - gemäß Figur 7 - ausreichendem Höhenspiel den Einsteckvorsprung 37 aufnimmt. Das Höhenspiel ist derart, dass bei unverkantetem oder leicht nach oben verkantetem Einschieben des Einsteckvorsprungs 37 in die Einsteckaufnahme 36 Zahnung 15 und Gegenzahnung 34 nicht miteinander verhaken. Sollte allerdings - ausgehend von der montierten Situation gemäß Figur 7 - das Halteelement 6 angehoben werden, beispielsweise durch Windsog, der das Solarmodul 2 beaufschlagt, so verhaken sich Zahnung 15 und Gegenzahnung 34, wodurch ein weiteres Abheben oder auch weiteres Durchbiegen des Solarmoduls 2 verhindert ist. Aufgrund des einen, schräg verlaufenden Tragstegs 22 wird der Einsteckvorsprung 37 während des Einsteckvorgangs seitlich geführt und gelenkt, um eine im Wesentlichen reproduzierbare Position zu erhalten. Das anfängliche Einstecken des Einsteckvorsprungs 37 in die Einsteckaufnahme 36 wird aufgrund des Einführkeils 20 erleichtert. Die Figur 7 verdeutlicht, dass der Einsteckvorsprung 37 von der Kante 33 hier in die Einsteckaufnahme 36 eingeschoben wird, sodass die Gegenzahnung 34 - im eingesteckten Zustand gemäß Figur 7 - nahe zum Montageschenkel 10 liegt. Sollte daher beim durch Starkwind erfolgenden Anheben des Solarmoduls 2 Zahnung 15 und Gegenzahnung 34 extrem stark beansprucht werden, so werden die Gegenzähne 35 lediglich ein oder zwei Zähne 16 weiterrutschen, dort wird dann jedoch ein fester Halt entstehen, sodass das Solarmodul 2 auch bei außerordentlich starken Belastungen sicher gehalten und vor zur starker Durchbiegung geschützt ist.

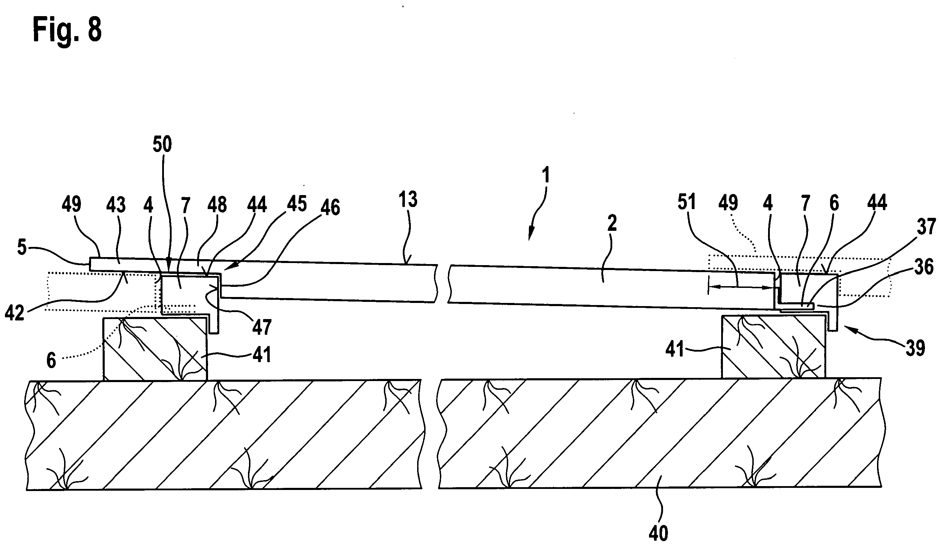

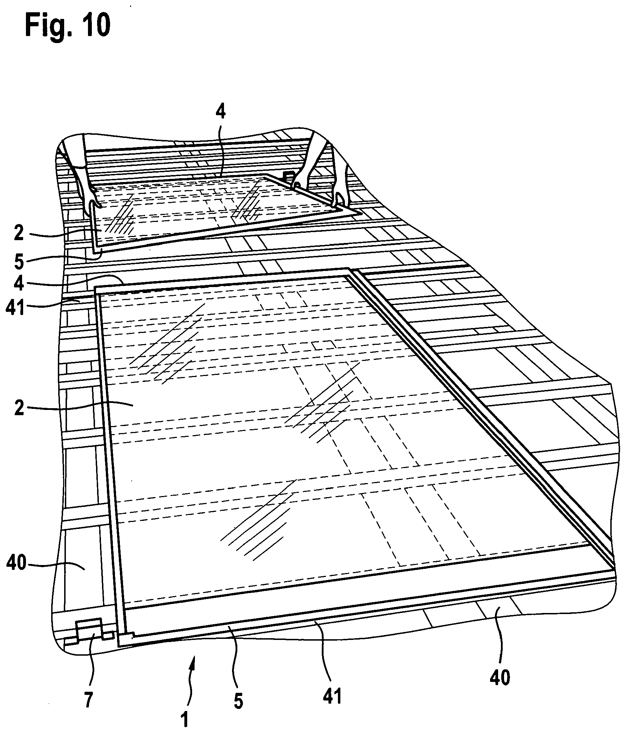

Die Figur 8 zeigt - in schematischer Weise - eine fertige montierte Solarmodulanordnung 1. Die Montagefläche 39 wird von einer Dachfläche eines Dachs, insbesondere Schrägdachs eines Gebäudes oder dergleichen, gebildet. Hierzu sind auf Dachsparren 40 Dachlatten 41 angeordnet, wobei der Abstand der beiden aus der Figur 8 hervorgehenden Dachlatten 41 entsprechend der für die Befestigung der Solarmoduls 2 erforderlichen Größe gewählt wird. Selbstverständlich befinden sich - wie die gebrochene Darstellung der Figur 8 andeutet - zwischen den beiden dort dargestellten Dachlatten 41 noch weitere Dachlatten, die jedoch nicht für die Befestigung des Solarmoduls 2 erforderlich sind, jedoch für die seitlich an die Solarmodulanordnung 1 angrenzende Dacheindeckung. In dem Bereich, in dem sich die Solarmodulanordnung 1 befindet, ist keine Dacheindeckung erforderlich, da diese von der Solarmodulanordnung 1 gebildet ist. An den aus der Figur 8 hervorgehenden, beiden Dachlatten 41 ist jeweils ein Befestigungselement 7 befestigt. Sofern es sich bei der Montagefläche 39 um eine schräge Montagefläche, also insbesondere um eine Schrägdachfläche, handelt, wird davon ausgegangen, dass sich die rechte Dachlatte 41 auf einem höheren Niveau befindet als die linke Dachlatte 41. Demzufolge ist es bei der Montage der Halteelemente 6 sehr einfach, diese zunächst nur auf die Dachlatten 41 aufzulegen, da sich die Anschlagstege 27 an den Dachlatten 41 abstützen und auf diese Art und Weise ein Herunterrutschen verhindern. Ist die genaue Position für die Halteelemente 6 ermittelt, so werden diese mit entsprechenden Befestigungsschrauben, die die Befestigungslöcher 24 beziehungsweise 24' durchgreifen, an den Dachlatten 41 befestigt. Grundsätzlich ist es möglich, das Solarmodul 2 nur mit einem Halteelement 6 und vorne und hinten jeweils nur mit einem Befestigungselement 7 zu versehen, wobei diese Elemente dann vorzugsweise mittig angeordnet werden. Da dadurch aber eine eher instabile Konstruktion entsteht, ist es vorteilhaft, wenn - wie aus den Figuren 2, 3, 9 und 10 ersichtlich, jeweils zwei, zueinander beabstandete Halteelemente 6 und entsprechend angeordnete Befestigungselemente 7 vorzusehen. Der Einfachheit halber soll bei der Beschreibung der Figur 8 jedoch nur jeweils nur ein Halteelement 6 und zwei Befestigungselemente 7 erwähnt werden. Nachdem nun die beiden Befestigungselemente 7 an den Dachlatten 41 befestigt worden sind, wird das Solarmodul 2 montiert, an dessen erste Stirnseite 4 zuvor ein Halteelement 6 befestigt wurde. Durch Handhabung des Solarmoduls 2, insbesondere von zwei Monteuren, die es jeweils auf einer Seite anfassen (Figur 10), wird - giebelseitig - der Einsteckvorsprung 37 des Halteelements 6 in die Einsteckaufnahme 36 des zugehörigen Befestigungselements 7 eingesteckt. Aufgrund des erwähnten Höhenspiels ist dies auch dann möglich, wenn die Ebene des Solarmoduls 2 schrägwinklig zur Längserstreckung der Dachsparren 40 verläuft, also das Solarmodul 2 noch nicht auf dem linksseitigen Befestigungselement 7 der Figur 8 aufliegt. Ist der Einsteckvorsprung 37 komplett eingesteckt, so wird das Solarmodul 2 von den Monteuren abgelegt, derart, dass die Unterseite 42 eines am Solarmodul 2 ausgebildeten Flachstegs 43 auf der Auflagefläche 44 des linksseitigen (traufenseitigen) Befestigungselements 7 aufliegt. Die Auflagefläche 44 wird - wie bereits erwähnt - von der Oberseite des Dachstegs 29 des Befestigungselements 7 gebildet. Das Solarmodul 2 weist eine Stufe 45 auf, wodurch die Dicke reduziert ist, sodass sich dort der Flachsteg 43 ergibt. Die Unterseite 42 des Flachstegs 43 bildet daher eine Stufenfläche der Stufe 45 und die andere Stufenfläche wird von einer zweiten Stirnseite 46 des Solarmoduls 2 gebildet. Wird nunmehr von den Monteuren das Solarmodul 2 losgelassen, so wird es - je nach Einstecktiefe des Einsteckvorsprungs 37 in die Einsteckaufnahme 36 gegebenenfalls noch soweit nach unten rutschen, bis die zweite Stirnseite 46 an der Seite des Befestigungselements 7 anliegt. Diese Seite des Befestigungselements 7 bildet daher eine seitliche Anlagefläche 47. Der Flachsteg 43 gliedert sich in zwei Abschnitte, nämlich - ausgehend von der zweiten Stirnseite 46 - in einen Auflegesteg 48 und - daran anschließend - in einen Überlappungssteg 49, der bis zum Ende 5 des Solarmoduls 2 reicht. Die Unterseite des Auflegestegs 48, die einen Teil der Unterseite 42 ausmacht, bildet demgemäß einen Unterseitenbereich 50 des Solarmoduls 2, mit dem es auf dem zugeordneten Befestigungselement 7 aufliegt.

Soll rechtsseitig vom montierten Solarmodul 2 der Figur 8 ein weiteres Solarmodul montiert werden, welches bereichsweise und gestrichelt dargestellt ist, so ist dies ohne weiteres möglich, da beim Ablegen des entsprechend wie oben beschrieben montierten weiteren Solarmoduls dessen Flachsteg 43 auf dem rechtsseitigen Befestigungselement 7 aufliegt, ohne dass dieser sich auf dem bereits montierten Solarmodul 2 abstützt. Der Überlappungssteg 49 liegt - wie ersichtlich - jedoch geschuppt zum bereits montierten Solarmodul 2 mit der Folge, dass ablaufende Feuchtigkeit und so weiter nicht zwischen die montierten Solarmodule 2 eintreten kann. Auch die Montage eines weiteren, links vom bereits montierten Solarmodul 2 anzuordnenden Solarmoduls ist ohne weiteres möglich. Dieses weitere, nunmehr dritte Solarmodul ist in der Figur 8 ebenfalls gestrichelt auf der linken Seite angedeutet. Für dessen Montage ist es lediglich erforderlich, den Einsteckvorsprung 37 des ihm zugeordneten Halteelements 6 in die Einsteckaufnahme 36 des montierten Befestigungselements 7 einzustecken, wobei der Zwischenraum zwischen der dort vorhandenen Dachlatte 41 und der Unterseite 42 des Flachstegs 43 hinreichend groß ist, also die Montagearbeiten nicht behindert. Auch hier stützt sich das montierte Solarmodul 2 nicht auf das gestrichelt angedeutete Solarmodul auf.

Aus alledem geht hervor, dass trotz geschuppter Anordnung der verschiedenen Solarmodule 2 diese - ohne eine bestimmte Reihenfolge einhalten zu müssen - einfach montiert oder demontiert werden können. Bevorzugt wird man selbstverständlich derart vorgehen, dass man zunächst die tiefer gelegenen Solarmodule 2 und dann die höher liegenden Solarmodule 2 montiert. Dieses Vorgehen ist jedoch nicht zwingend. Der von einem Überlappungssteg 49 eines Solarmoduls 2 überlappte Bereich eines benachbarten Solarmoduls 2 wird als Überlappungsbereich 51 bezeichnet, der vorzugsweise derart groß gewählt ist, dass einerseits die aktive Fläche des Solarmoduls geringstmöglichst verkleinert wird, wobei andererseits dennoch ein Schutz gegen eindringenden Wind und eindringende Feuchtigkeit gegeben ist. Ferner kann vorzugsweise in dieser Zone eine Dichtung angeordnet werden. Hierzu wird nachstehend noch Näheres ausgeführt.

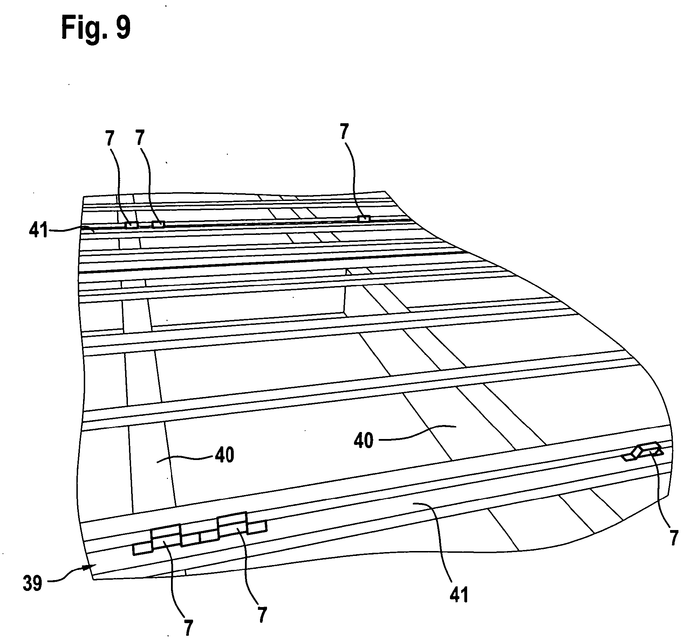

Die Figur 9 verdeutlicht die vorstehend beschriebene Situation, bei noch nicht montierten Solarmodulen 2. Vielmehr sind bereits mehrere Befestigungselemente 7 an den Dachlatten 41 festgelegt, wobei jeweils zwei montierte Befestigungselemente 7 für die Befestigung eines Solarmoduls einerseits im Bereich von dessen erster Stirnseite 4 und andererseits im Bereich von dessen zweiter Stirnseite 46 vorgesehen sind. Die aus der Figur 9 ebenfalls ersichtlichen, linksseitig liegenden, weiteren beiden Befestigungselemente 7 dienen der Festlegung eines seitlich benachbarten Solarmoduls.

Wie in der Figur 9 dargestellt ist, sind die Befestigungselemente 7, die benachbarten Solarmodulen 2 zugeordnet sind, derart an der jeweiligen Dachlatte 41 befestigt, dass sie sich gegenseitig berühren und somit ihre Ausrichtung erleichtern. Insbesondere fluchten und berühren sich die Befestigungsstege 23 der Befestigungselemente 7. Diese Anordnung ist auch der Figur 3 zu entnehmen. Vorteilhafterweise wird zunächst eines der Befestigungselemente 7 am Dach positioniert und befestigt. Danach kann ein weiteres der Befestigungselemente 7 an das erstgenannte Befestigungselement 7 angelegt werden, sodass es dieses berührt. Dadurch entfällt eine separate aufwendige Positionierung und Ausrichtung des zweitgenannten Befestigungselements 7 und es kann sehr einfach am Dach befestigt werden.

Die Figur 10 verdeutlicht die Montage, wobei bereits ein unteres, traufseitiges Solarmodul 2 montiert ist. Der Anschauung wegen, handelt es sich dabei um ein Solarmodulmodel mit Glaspaneel, um die Dachkonstruktion sehen zu können. Es ist ersichtlich, dass das höherliegende, giebelseitige weitere Solarmodul 2 von zwei Monteuren bereits mit seinen Einsteckvorsprüngen 37 in entsprechende Einsteckaufnahmen 36 weiterer Befestigungselemente 7 eingesteckt ist und nunmehr das Absenken erfolgen wird, bei dem sich der Unterseitenbereich 50 des momentan gehaltenen Solarmoduls 2 auf die Auflageflächen 44 der zugehörigen Befestigungselemente 7 auflegen wird. Gleichzeitig entsteht dadurch die bereits vorstehend erwähnte geschuppte Anordnung der Solarmodule 2. Zur Festlegung werden nach dem Ablegen des Solarmoduls 2 dieses durchsetzende Befestigungsschrauben in die Befestigungsöffnungen 30 der entsprechenden Befestigungselemente 7 eingesetzt und mit den erwähnten Materialklötzen verschraubt.

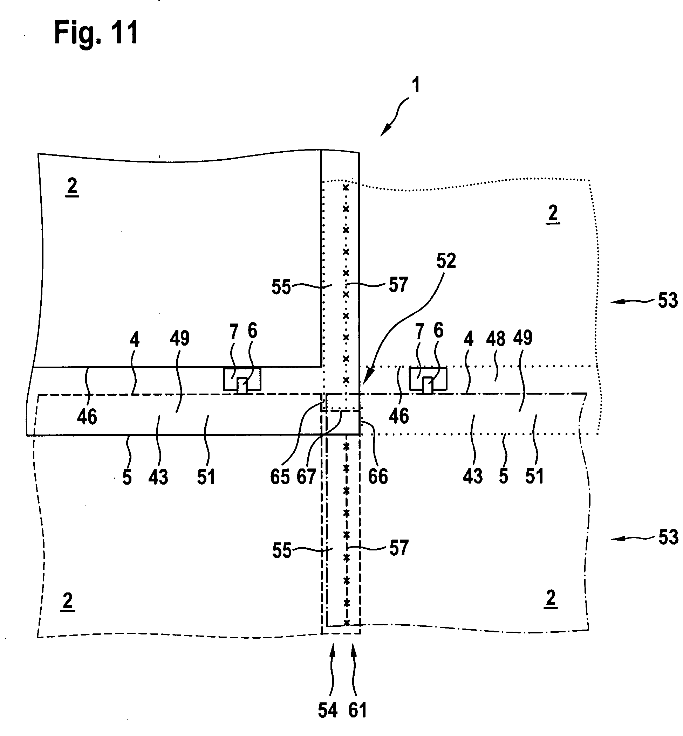

Die Figuren 11 bis 13 verdeutlichen die bereits vorstehend erwähnte Überlappungssituation benachbarter Solarmodule 2, wobei die Figur 11 insbesondere auf einen Eckbereich 52 eingeht, an dem vier benachbarte Solarmodule 2 beteiligt sind. Die Solarmodule 2 sind nur bereichsweise in Figur 11 dargestellt. Dieser Verbund der mindestens vier Solarmodule 2 erfordert mindestens sechs Befestigungselemente 7 und mindestens vier Halteelemente 6 und mindestens einen Bereich einer Montagefläche 39. Jeweils zwei Solarmodule 2 sind längsseitig nebeneinander angeordnet und bilden ein Solarmodulpaar 53, wobei die beiden Solarmodulpaare 53 stirnseitig nebeneinander angeordnet sind. Die erwähnte Mindestbauteilanzahl resultiert daraus, dass das in der Figur 11 obere und in Richtung auf einen Dachfirst weisende Solarmodulpaar 53 mindestens zwei Halteelemente 6 (pro Solarmodul 2 mindestens ein Halteelement 6) aufweist, wobei die beiden Halteelemente 6 in entsprechende, an der Montagefläche 39 befestigte Befestigungselemente 7 eingesteckt sind und wobei die beiden Solarmodule 2 des oberen Solarmodulpaars 53 mit ihren Unterseitenbereichen 50 auf den Auflageflächen 44 von mindestens zwei weiteren Befestigungselementen 7 aufliegen (aus der Figur 11 ersichtlich) und wobei die Solarmodule 2 des unteren Solarmodulpaars 53 (traufseitiges Solarmodulpaar) jeweils mindestens ein Halteelement 6 aufweisen, wobei die Halteelemente 6 in die Einsteckaufnahmen 36 der aus der Figur 11 hervorgehenden Befestigungselemente 7 eingesteckt sind und diese Solarmodule 2 mit ihren Unterseitenbereichen 50 auf Auflageflächen 44 von mindestens zwei entsprechend traufseitig montierten Befestigungselementen 7 aufliegen. Selbstverständlich ist es - wie vorstehend bereits erwähnt - auch möglich, dass pro Solarmodul 2 eine größere Anzahl von Halteelementen 6 und Befestigungselementen 7 verwendet wird. Die Anordnung ist gemäß Figur 11 nun vorzugsweise derart getroffen, dass das links oben liegende Solarmodul 2 das links unten liegende Solarmodul 2 teilweise überlappt. Entsprechendes gilt für das rechts oben liegende Solarmodul 2 in Bezug auf das rechts unten liegende Solarmodul 2. Ferner überlappt das links oben liegende Solarmodul 2 teilweise das rechts oben liegende Solarmodul 2 und es liegt auch eine Überlappung des links unten liegenden Solarmoduls 2 zum rechts unten liegenden Solarmodul 2 vor. Im Eckbereich 52 überlappt das links oben liegende Solarmodul 2 das rechts unten liegende Solarmodul 2, sodass insgesamt ein wetterdichter Verbund geschaffen ist. Im Einzelnen wird auf diese geschuppte Verbundsituation noch näher eingegangen.

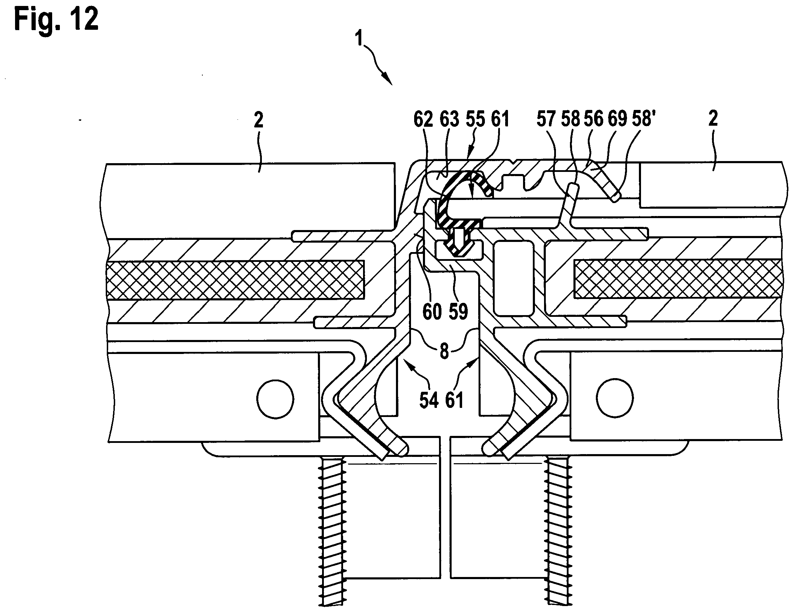

Anhand der Figur 12 wird zunächst das Überlappen seitlich benachbarter Solarmodule 2 verdeutlicht. Es ist aus der Figur 12 erkennbar, dass das linksseitige Solarmodul 2 an seiner Längsseite 54 eine Überlappungszunge 55 aufweist. Der Endbereich 56 der Überlappungszunge 55 weist eine nach unten gerichtete Krümmung 69 auf. Das in der Figur 12 rechts liegende Solarmodul 2 besitzt in seinem Seitenrandbereich 61 einen nach oben stehenden Barrieresteg 57, der von der Überlappungszunge 55 überlappt wird. Bevorzugt übergreift die Krümmung 69 der Überlappungszunge 55 den Barrieresteg 57, d.h., dessen Ende 58 liegt höher als das Ende 58' des Endbereichs 56. Auf diese Art und Weise wird ein Labyrinth geschaffen, so dass eindringender Wind und/oder eindringende Feuchtigkeit zurückgehalten wird. Zusätzlich weist der Seitenrandbereich 61 des rechtsseitig liegenden Solarmoduls 2 eine vorspringende Seitenschiene 59 auf, die zur reproduzierbaren Stellung der beiden Solarmodule 2 gegen eine Anlagefläche 60 der Längsseite 54 des linksseitigen Solarmoduls 2 anliegt.

Der Figur 12 ist insbesondere zu entnehmen, dass die Überlappungszunge 55 des linksseitigen Solarmoduls 2 den Seitenrandbereich 61 des rechtsseitigen Solarmoduls 2 überlappt, d.h., der erwähnte Barrieresteg 57 gehört diesem Seitenrandbereich 61 an. Ferner geht vom Seitenrandbereich 61 des rechtsseitigen Solarmoduls 2 eine erste Dichtung 62 aus, die an der Unterseite 63 der Überlappungszunge 55 anliegt. Vom Endbereich 56 der Überlappungszunge 55 her gesehen, liegt zunächst das Labyrinth mit dem Barrieresteg 57 vor und es folgt dann die erste Dichtung 62.

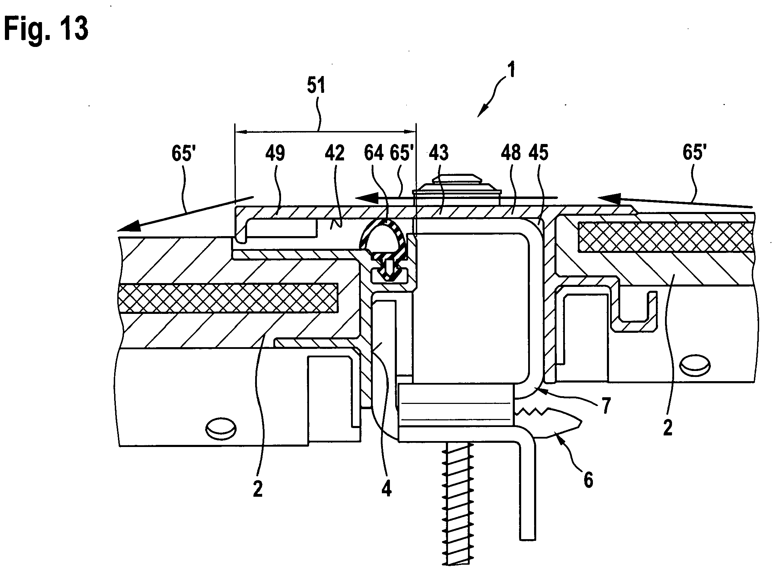

Die Figur 13 zeigt einen Längsschnitt im Stoßbereich zweier stirnseitig aneinandergrenzender Solarmodule 2. Es ist erkennbar, dass durch die Stufe 45 des auf der rechten Seite dargestellten Solarmoduls 2 der Flachsteg 43 ausgebildet wird, von dem ein Bereich den Überlappungssteg 49 bildet, der mit seiner Unterseite 42 auf der Auflagefläche 44 des Befestigungselements 7 aufliegt. Der vordere Bereich des Flachstegs 43 bildet den Überlappungssteg 49, der den Überlappungsbereich 51 des auf der linken Seite in Figur 13 dargestellten Solarmoduls 2 überlappt. Ferner ist der Figur 13 zu entnehmen, dass das auf der linken Seite dargestellte Solarmodul 2 im Bereich seiner ersten Stirnseite 4 eine zweite Dichtung 64 aufweist, die sich im Überlappungsbereich 51 befindet und an der Unterseite 42 des Überlappungsstegs 49 des in der Figur 13 rechten Solarmoduls 2 dichtend anliegt. Mit Pfeilen 65' ist ein Wasserlauf von Feuchtigkeit im Falle der Anordnung der Solarmodule 2 auf einem Schrägdach oder dergleichen dargestellt. Es wird deutlich, dass durch die Überlappung und auch durch die zweite Dichtung 64 eine Abdichtung gegenüber Wind und Feuchtigkeit erzielt ist.

Die erste und zweite Dichtung 62, 64 können alternativ auch als eine gemeinsame, einstückige Dichtung ausgebildet sein.

Anhand der Figur 11 soll die Überlappungssituation insbesondere im bereits erwähnten Eckbereich 52 erläutert werden, in dem vier Solarmodule 2 aneinandergrenzen. Zur Verdeutlichung ist das links unten dargestellte Solarmodul mit gestrichelter Linie, das rechts unten dargestellt Solarmodul 2 mit strichpunktierter Linie, das rechts oben dargestellt Solarmodul mit gepunkteter Linie und das links oben dargestellte Solarmodul 2 mit durchgezogener Linie wiedergegeben. Da alle Solarmodule 2 identisch ausgebildet sind, gilt die nachstehende Erläuterung zu den einzelnen Bereichen eines Solarmoduls 2 für alle Solarmodule 2.

Die Figur 11 zeigt, dass sich die Überlappungszunge 55 - gemäß dem links unten dargestellten Solarmodul 2 - ausgehend von einer im Bereich der ersten Stirnseite 4 liegenden Ausklinkung 65 entlang der Längsseite 54 dieses Solarmoduls 2 erstreckt. Ferner ist erkennbar, dass sich bei dem rechts oben liegenden Solarmodul 2 der Seitenrandbereich 61 - ausgehend von einer in der Nähe der zweiten Stirnseite 46 liegenden Gegenausklinkung 66 bis zu der ersten Stirnseite 4 über die Längsseite 54 des genannten Solarmoduls 2 erstreckt. Ferner ist bei dem in der Figur 11 rechts unten liegenden Solarmoduls 2 ersichtlich, dass - ausgehend von der ersten Stirnseite 4 - über eine Länge, die so groß ist oder etwa eben so groß ist wie die Länge des Überlappungsstegs 49 (gemäß dem rechts oben in Figur 11 dargestellten Solarmodul 2) kein Barrieresteg 57 ausgebildet ist. Gemäß dem in Figur 11 rechts oben dargestellten Solarmodul 2 endet aufgrund der Gegenausklinkung 66 der Seitenrandbereich 61 zwischen dem Ende des Auflegestegs 48 und dem Ende des Überlappungsstegs 49. Im dargestellten Ausführungsbeispiel endet der Seitenrandbereich 61 etwa mittig zwischen dem Ende des Auflegestegs 48 und dem Ende des Überlappungsstegs 49. Die erwähnte Ausklinkung 65 der Überlappungszunge 55 und die Gegenausklinkung 66 sind derart bemessen, dass sie stumpf aneinandergrenzen. Aufgrund der zur Figur 11 vorstehend erläuterten Ausgestaltungen ergibt sich beim Aufbau der Solarmodulanordnung 1 im Eckbereich 52 folgende Situation: die Überlappungszunge 55 des links unten dargestellten Solarmoduls überlappt den Seitenrandbereich 61 und den Barrieresteg 57 des rechts unten dargestellten Solarmoduls 2. Das rechts oben dargestellte Solarmodul 2 übergreift mit seinem Überlappungssteg 49 den Überlappungsbereich 51 des rechts unten dargestellten Solarmoduls 2, wobei Ausklinkung 65 und Gegenausklinkung 66 ineinandergreifen. Das links oben dargestellte Solarmodul 2 überlappt mit seiner Überlappungszunge 55 sowohl den Seitenrandbereich 61 als auch den Barrieresteg 57 des rechts oben dargestellten Solarmoduls 2, wobei diese Überlappungszunge 55 auch die Stoßfuge 67 von Ausklinkung 65 und Gegenausklinkung 66 überlappt. Ferner überlappt der Überlappungssteg 49 des links oben dargestellten Solarmoduls 2 den Überlappungsbereich 51 des links unten dargestellten Solarmoduls 2 und auch ein Teil des Überlappungsbereichs 51 des rechts unten dargestellten Solarmoduls 2. Aus alledem ergibt sich, dass eine wind- und feuchtigkeitsdichte Überlappungssituation bei der Solarmodulanordnung 1 der Figur 11 geschaffen ist.

Trotz der vorstehend beschriebenen Überlappungssituation der einzelnen Solarmodule kann aus/in einem bestehenden Verbund mehrerer Solarmodule ein beliebiges Solarmodul demontiert oder montiert werden. Hierzu ist es lediglich erforderlich, das Solarmodul entsprechend der Überlappungssituation immer von der gleichen Seite her "einzudrehen" beziehungsweise entsprechend "herauszudrehen". Bei dieser Demontage oder Montage können alle übrigen Solarmodule im montierten Zustand verbleiben.

Für extrem windschiefe Montageflächen, insbesondere Dachflächen, ist bei einer Montage, so wie vorstehend erläutert, die Dichtigkeit des Solarmodulverbunds nicht sichergestellt. Derart windschiefe Montageflächen erfordern bei der Montage eines Solarmoduls ein entsprechend starkes Verkanten (Ebene des Solarmoduls gegenüber einer gedachten Montageebene), sodass der Einsteckvorsprung 37 des Halteelements 6 nicht mehr in die Einsteckaufnahme 36 des Befestigungselements 7 eingesteckt werden kann, da das Höhenspiel aufgebraucht ist und nunmehr Zahnung 15 und Gegenzahnung 34 gegeneinander treten. Diese Situation ist gewünscht, da der Monteur dann die Montagearbeiten abbricht und bei dem Befestigen der Befestigungselemente 7 zwangsläufig Änderungen vornehmen muss. Diese bestehen darin, die Befestigungselemente 7 nicht mehr direkt auf der Grundfläche, beispielsweise auf den Dachlatten 41, zu befestigen, sondern entsprechend dicke Unterlegungen zu verwenden, d.h., die Grundfläche wird beziehungsweise die Dachlatten werden durch die Unterlegungen aufgefüttert, derart, dass sich eine möglichst ebene Montagefläche ergibt. Auf die Unterlegungen, die an der Grundfläche befestigt werden, können dann die Befestigungselemente 7 befestigt werden. Da sich durch die Unterlegungen eine mehr oder weniger ebene Montagefläche ergibt, ist die Dichtigkeit zwischen den einzelnen Solarmodulen gegenüber Wind- und Feuchtigkeitseinfluss gewährleistet.

## Patentansprüche

1. Solarmodulanordnung mit mindestens einem Solarmodul (2), mindestens zwei Befestigungselementen (7), mindestens einem Halteelement (6) und mindestens einem Bereich einer Montagefläche (39), wobei jedes der Befestigungselemente (7) mit mindestens einer Einsteckaufnahme (36) sowie mit einer Auflagefläche (44) und das Halteelement (6) mit mindestens einem Einsteckvorsprung (37) versehen ist, das Solarmodul (2) im Bereich einer ersten seiner Stirnseiten (4) das Halteelement (6) mit dem Einsteckvorsprung (37) aufweist, der in die Einsteckaufnahme (36) eines ersten der an der Montagefläche (39) befestigten Befestigungselemente (7) in Richtung oder etwa in Richtung der Erstreckung der Montagefläche (39) eingesteckt angeordnet ist, wobei das Solarmodul (2) mit einem der ersten Stirnseite (4) gegenüberliegenden Unterseitenbereich (50) auf der Auflagefläche (44) des anderen, an der Montagefläche (39) mit Abstand zum ersten Befestigungselement (7) befestigten, zweiten Befestigungselement (7) aufliegt, **dadurch gekennzeichnet, dass** das Solarmodul (2) mit einer der ersten Stirnseite (4) gegenüberliegenden, weiteren, zweiten Stirnseite (46) an einer seitlichen Anlagefläche (47) des zweiten Befestigungselements (7) anliegt, dass der Unterseitenbereich (50) an einer die Dicke des Solarmoduls (2) reduzierenden Stufe (45) des Solarmoduls (2) ausgebildet ist, dass durch die Stufe (45) ein Flachsteg (43) ausgebildet ist, der bereichsweise einen Auflegesteg (48) und einen sich daran anschließenden Überlappungssteg (49) bildet, wobei der Auflegesteg (48) zur Auflage auf die Auflagefläche (44) und der Überlappungssteg (49) zum Überlappen eines Überlappungsbereichs (51) eines benachbarten weiteren Solarmoduls (2) dient und wobei durch die Stufe (45) die zweite Stirnseite (46) ausgebildet ist.

2. Solarmodulanordnung nach Anspruch 1, **dadurch gekennzeichnet, dass** die Montagefläche (39) eine Dachfläche, insbesondere eine Schrägdachfläche, ist.

3. Solarmodulanordnung nach einem der vorhergehenden Ansprüche, **dadurch gekennzeichnet, dass** das erste Befestigungselement (7) in einem höher liegenden Bereich der Montagefläche (39), insbesondere Schrägdachfläche, und das zweite Befestigungselement (7) in einem tiefer liegenden Bereich der Montagefläche (39), insbesondere Schrägdachfläche, angeordnet ist.

4. Solarmodulanordnung nach einem der vorhergehenden Ansprüche, **dadurch gekennzeichnet, dass** mindestens eines der Befestigungselemente (7), insbesondere das zweite Befestigungselement (7), derart ausgebildet und derart relativ zu mindestens einem anderen der Befestigungselemente (7), insbesondere zum ersten Befestigungselement (7), an der Montagefläche (39) befestigt ist, dass in seiner Einsteckaufnahme (36) der Einsteckvorsprung (37) eines weiteren Halteelements (6) einsteckbar/eingesteckt ist, das an einem weiteren Solarmodul (2) im Bereich von dessen erster Stirnseite (4) angeordnet ist.

5. Solarmodulanordnung nach einem der vorhergehenden Ansprüche, **dadurch gekennzeichnet, dass** an jedem der Befestigungselemente (7) die Auflagefläche (44) oberhalb der Einsteckaufnahme (36) ausgebildet ist.

6. Solarmodulanordnung nach einem der vorhergehenden Ansprüche, **dadurch gekennzeichnet, dass** jedes Solarmodul (2) zwei, einander gegenüberliegende Längsseiten (54) aufweist, wobei die eine Längsseite (54) eine Überlappungszunge (55) für ein Überlappen eines Bereichs eines seitlich benachbarten Solarmoduls (2) aufweist und wobei die andere Längsseite (54) einen Seitenrandbereich (61) mit hochstehendem Barrieresteg (57) aufweist, der - im Falle des Vorhandenseins eines benachbarten Solarmoduls (2) - von dessen Überlappungszunge (55) überlappt ist.

7. Solarmodulanordnung nach Anspruch 6, **dadurch gekennzeichnet, dass** sich die Überlappungszunge (55) ausgehend von einer im Bereich der ersten Stirnseite (4) liegenden Ausklinkung (65) entlang der Längsseite (54) des Solarmoduls (2) bis zum Ende des Überlappungsstegs (49) erstreckt.

8. Solarmodulanordnung nach Anspruch 6 oder 7, **dadurch gekennzeichnet, dass** sich der Seitenrandbereich (61) ausgehend von einer im Bereich der zweiten Stirnseite (46) liegenden Gegenausklinkung (66) bis zu der ersten Stirnseite (4) über die Längsseite (54) des Solarmoduls (2) erstreckt.

9. Solarmodulanordnung nach einem der Ansprüche 6 bis 8, **dadurch gekennzeichnet, dass** ausgehend von der ersten Stirnseite (4) über eine Länge, die so groß ist oder etwa so groß ist wie die Länge des Überlappungsstegs (49), kein Barrieresteg (57) am Seitenrandbereich (61) ausgebildet ist.

10. Solarmodulanordnung nach einem der Ansprüche 6 bis 9, **dadurch gekennzeichnet, dass** aufgrund der Gegenausklinkung (66) der Seitenrandbereich (61) zwischen dem Ende des Auflegestegs (48) und dem Ende des Überlappungsstegs (49) endet.

11. Solarmodulanordnung nach einem der Ansprüche 6 bis 10, **dadurch gekennzeichnet, dass** vom Seitenrandbereich (61) mindestens eine erste Dichtung (62) ausgeht, die - im Falle des Vorhandenseins eines benachbarten Solarmoduls (2) - an dessen Unterseite seiner Überlappungszunge (55) anliegt.

12. Solarmodulanordnung nach einem der vorhergehenden Ansprüche, **dadurch gekennzeichnet, dass** vom Überlappungsbereich (51) mindestens eine zweite Dichtung (64) ausgeht, die - im Falle des Vorhandenseins eines benachbarten Solarmoduls (2) - an dessen Unterseite seines Überlappungsstegs (49) anliegt.

13. Solarmodulanordnung nach einem der vorhergehenden Ansprüche, **gekennzeichnet durch** mindestens vier im Verbund angeordnete Solarmodule (2), mit mindestens sechs Befestigungselementen (7), mindestens vier Haltelementen (6) und mindestens einem Bereich einer Montagefläche (39), wobei jeweils mindestens zwei Solarmodule (2) längsseitig nebeneinander angeordnet sind und eine Reihe (3) bilden und die mindestens zwei Reihen (3) stirnseitig nebeneinander angeordnet sind.

14. Solarmodulanordnung nach einem der vorhergehenden Ansprüche, **gekennzeichnet durch** die Ausbildung als Indachsystem.

15. Verfahren zur Erstellung einer Solarmodulanordnung gemäß einem oder mehreren der vorhergehenden Ansprüche, mit mindestens einem Solarmodul (2), mindestens zwei Befestigungselementen (7), mindestens einem Halteelement (6) und mindestens einem Bereich einer Montagefläche (39), wobei jedes der Befestigungselemente (7) mit mindestens einer Einsteckaufnahme (36) sowie mit einer Auflagefläche (44) und das Halteelement (6) mit mindestens einem Einsteckvorsprung (37) versehen ist, wobei
- das Halteelement (6) an dem Solarmodul (2) im Bereich einer ersten seiner Stirnseiten (4) befestigt wird,
- ein erstes der Befestigungselemente (7) an der Montagefläche (39) befestigt wird und ein zweites der Befestigungselemente (7) mit Abstand zum ersten Befestigungselement (7) ebenfalls an der Montagefläche (39) befestigt wird,
- das Solarmodul (2) derart gehandhabt wird, dass der Einsteckvorsprung (37) des Halteelements (6) in die Einsteckaufnahme (36) des ersten Befestigungselements (7) in Richtung oder etwa in Richtung der Erstreckung der Montagefläche (39) eingesteckt wird,
- das Solarmodul (2) insbesondere anschließend mit einem der ersten Stirnseite (4) gegenüberliegenden Unterseitenbereich (50) auf die Auflagefläche (44) des anderen Befestigungselements (7) abgelegt wird und
- anschließend - gegebenenfalls nach geringfügigen Positionskorrekturen des Solarmoduls (2) relativ zur Montagefläche (39) - das Solarmodul (2) an dem zweiten Befestigungselement (7) und/oder an der Montagefläche (39) befestigt, insbesondere festgeschraubt, wird.

## Claims

1. A solar module assembly comprising at least one solar module (2), at least two fastening elements (7), at least one support element (6) and at least one area of a mounting surface (39), wherein each of the fastening elements (7) is provided with at least one insertion receptacle (36) as well as with a bearing surface (44), and the support element (6) is provided with at least one insertion projection (37), the solar module (2) has, in the area of a first one of its front sides (4), the support element (6) comprising the insertion projection (37), which is arranged in an inserted position within the insertion receptacle (36) of a first one of the fastening (7), which are fastened to the mounting surface (39), in the direction of or approximately in the direction of the extension of the mounting surface (39), wherein, with an underside area (50) located opposite the first front side (4), the solar module (2) bears on the bearing surface (44) of the other, second fastening element (7), which is fastened to the mounting surface (39) at a distance to the first fastening element (7), **characterised in that** the solar module (2) lies against a lateral lay-on surface (47) of the second fastening element (7) with a further, second front side (46) located opposite the first front side (4), that the underside area (50) is embodied on a step (45) of the solar module (2), which reduces the thickness of the solar module (2), that a flat web (43), which forms a placing web (48) and an adjacent overlap web (49) in certain areas, is embodied by the step (45), wherein the placing web (48) serves the purpose of being placed onto the bearing surface (44), and the overlap web (49) serves the purpose of overlapping an overlap area (51) of an adjacent further solar module (2), and wherein the second front side (46) is embodied by the step (45).

2. The solar module assembly according to claim 1, **characterised in that** the mounting surface (39) is a roof surface, in particular a slanted roof surface.

3. The solar module assembly according to any one of the preceding claims, **characterised in that** the first fastening element (7) is arranged in a higher area of the mounting surface (39), in particular slanted roof surface, and the second fastening element (7) is arranged in a lower area of the mounting surface (39), in particular slanted roof surface.

4. The solar module assembly according to any one of the preceding claims, **characterised in that** at least one of the fastening elements (7), in particular the second fastening element (7), is embodied such and is fastened to the mounting surface (39) relative to at least one other one of the fastening elements (7), in particular to the first fastening elements (7), such that in its insertion receptacle (36), the insertion projection (37) of a further supporting element (6), which is arranged on a further solar module (2) in the area of the first front side (4) thereof, can be inserted/is inserted.

5. The solar module assembly according to any one of the preceding claims, **characterised in that** the bearing surface (44) is embodied above the insertion receptacle (36) at each of the fastening elements (7).

6. The solar module assembly according to any one of the preceding claims, **characterised in that** each solar module (2) has two longitudinal sides (54) located opposite on another, wherein the one longitudinal side (54) has an overlap tongue (55) for overlapping an area of a laterally adjacent solar module (2), and wherein the other longitudinal side (54) has a lateral edge area (61) comprising an upstanding barrier web (57), which - in the event of that an adjacent solar module (2) is present - is overlapped by the overlap tongue (55) thereof.

7. The solar module assembly according to claim 6, **characterised in that**, starting at a recess (65) located in the area of the first front side (4), the overlap tongue (55) extends along the longitudinal side (54) of the solar module (2) to the end of the overlap web (49).

8. The solar module assembly according to claim 6 or 7, **characterised in that**, starting at a counter recess (66) located in the area of the second front side (46), the side edge area (61) extends across the longitudinal side (54) of the solar module (2) to the first front side (4).

9. The solar module assembly according to any one of claims 6 to 8, **characterised in that**, starting at the first front side (4) across a length, which is as large as or approximately as large as the length of the overlap web (49), no barrier web (57) is embodied on the lateral edge area (61).

10. The solar module assembly according to any one of claims 6 to 9, **characterised in that**, due to the counter recess (66), the side edge area (61) ends between the end of the placing web (49) and the end of the overlap web (49).

11. The solar module assembly according to any one of claims 6 to 10, **characterised in that** at least one first seal (62) starts at the side edge area (61), which seal - in the event of that an adjacent solar module (2) is present - bears on the underside thereof of the overlap tongue thereof (55).

12. The solar module assembly according to any one of the preceding claims, **characterised in that** at least one second seal (64) starts at the overlap area (51), which seal - in the event of that an adjacent solar module (2) is present - bears on the underside thereof of the overlap web (49) thereof.

13. The solar module assembly according to any one of the preceding claims, **characterised in that** at least four solar modules (2), which are arranged in combination, comprising at least six fastening elements (7), at least four support elements (6) and at least one area of a mounting surface (39), wherein at least two solar modules (2) are in each case arranged next to one another on the longitudinal side and form a row (3), and the at least two rows (3) are arranged next to one another on the front side.

14. The solar module assembly according to any one of the preceding claims, **characterised by** the embodiments as in-roof system.

15. A method for creating a solar module assembly according to any one or a plurality of the preceding claims, comprising at least one solar module (2), at least two fastening elements (7), at least one support element (6) and at least one area of a mounting surface (39), wherein each of the fastening elements (7) is provided with at least one insertion receptacle (36) as well as with a bearing surface (44), and the holding element (6) is provided with at least one insertion projection (37), wherein
- the support element (6) is fastened to the solar module (2) in the area of a first one of its front sides (4),
- a first one of the fastening elements (7) is fastened to the mounting surface (39) and a second one of the fastening elements (7) is also fastened to the mounting surface (39) at a distance to the first fastening element (7),
- the solar module (2) is handled such that the insertion projection (37) of the support element (6) is inserted into the insertion receptacle (36) of the first fastening element (7) in the direction of or approximately in the direction of the extension of the mounting surface (39),
- in particular subsequently, the solar module (2) is placed onto the bearing surface (44) of the other fastening element (7) with an underside area (50) located opposite the first front side (4) and
- the solar module (2) is subsequently fastened, in particular screwed tightly, to the second fastening element (7) and/or to the mounting surface (39) - if applicable after slight position corrections of the solar module (2) relative to the mounting surface (39).

## Revendications

1. Agencement de module solaire avec au moins un module solaire (2), au moins deux éléments de fixation (7), au moins un élément de maintien (6) et au moins une région d'une face de montage (39), dans lequel chacun des éléments de fixation (7) est pourvu d'au moins un logement enfichable (36) ainsi que d'une face d'appui (44) et l'élément de maintien (6) est pourvu d'au moins une saillie enfichable (37), le module solaire (2) présente dans la région d'un premier de ses côtés frontaux (4) l'élément de maintien (6) avec la saillie enfichable (37) qui est disposée de manière enfichée dans le logement enfichable (36) d'un premier des éléments de fixation (7) fixés à la face de montage (39) en direction ou approximativement en direction de l'étendue de la face de montage (39), dans lequel le module solaire (2) s'appuie avec une région de côté inférieur (50) opposée au premier côté frontal (4) sur la face d'appui (44) de l'autre second élément de fixation (7) fixé à la face de montage (39) à distance du premier élément de fixation (7), **caractérisé en ce que** le module solaire (2) repose avec un second côté frontal (46) supplémentaire opposé au premier côté frontal (4) contre une face de contact latérale (47) du second élément de fixation (7), que la région de côté inférieur (50) est réalisée sur un gradin (45) du module solaire (2) réduisant l'épaisseur du module solaire (2), qu'une entretoise plate (43) est réalisée par le gradin (45), laquelle forme par région une entretoise de pose (48) et une entretoise de chevauchement (49) se rattachant à celle-ci, dans lequel l'entretoise de pose (48) sert à s'appuyer sur la face d'appui (44) et l'entretoise de chevauchement (49) sert à chevaucher une région de chevauchement (51) d'un module solaire voisin supplémentaire (2), et dans lequel le second côté frontal (46) est réalisé par le gradin (45).

2. Agencement de module solaire selon la revendication 1, **caractérisé en ce que** la face de montage (39) est une face de toit, notamment une face de toit incliné.

3. Agencement de module solaire selon une des revendications précédentes, **caractérisé en ce que** le premier élément de fixation (7) est disposé dans une région de la face de montage (39), notamment face de toit incliné, située plus haut, et le second élément de fixation (7) est disposé dans une région de la face de montage (39), notamment face de toit incliné, située plus bas.

4. Agencement de module solaire selon une des revendications précédentes, **caractérisé en ce qu'**au moins un des éléments de fixation (7), notamment le second élément de fixation (7), est réalisé de telle sorte et fixé par rapport à au moins un autre des éléments de fixation (7), notamment par rapport au premier élément de fixation (7), à la face de montage (39) de telle sorte que la saillie enfichable (37) d'un élément de maintien (6) supplémentaire qui est disposé sur un module solaire (2) supplémentaire dans la région de son premier côté frontal (4) peut être enfichée/est enfichée dans son logement enfichable (36).

5. Agencement de module solaire selon une des revendications précédentes, **caractérisé en ce que** la face d'appui (44) est réalisée au-dessus du logement enfichable (36) sur chacun des éléments de fixation (7).

6. Agencement de module solaire selon une des revendications précédentes, **caractérisé en ce que** chaque module solaire (2) présente deux côtés longitudinaux (54) opposés l'un à l'autre, dans lequel un des côtés longitudinaux (54) présente une languette de chevauchement (55) pour un chevauchement d'une région d'un module solaire (2) latéralement voisin et dans lequel l'autre côté longitudinal (54) présente une région de bord latéral (61) avec une entretoise de barrière (57) élevée qui est chevauchée par sa languette de chevauchement (55) - dans le cas de la présence d'un module solaire voisin (2).

7. Agencement de module solaire selon la revendication 6, **caractérisé en ce que** la languette de chevauchement (55) s'étend en partant d'une entaille (65) située dans la région du premier côté frontal (4) le long du côté longitudinal (54) du module solaire (2) jusqu'à l'extrémité de l'entretoise de chevauchement (49).

8. Agencement de module solaire selon la revendication 6 ou 7, **caractérisé en ce que** la région de bord latéral (61) s'étend en partant d'une entaille conjuguée (66) située dans la région du second côté frontal (46) jusqu'au premier côté frontal (4) á travers le côté longitudinal (54) du module solaire (2).

9. Agencement de module solaire selon une des revendications 6 à 8, **caractérisé en ce qu'**aucune entretoise de barrière (57) n'est réalisée sur la région de bord latéral (61) en partant du premier côté frontal (4) sur une longueur qui est aussi grande ou approximativement aussi grande que la longueur de l'entretoise de chevauchement (49).

10. Agencement de module solaire selon une des revendications 6 à 9, **caractérisé en ce que** la région de bord latéral (61) se termine entre l'extrémité de l'entretoise de pose (48) et l'extrémité de l'entretoise de chevauchement (49) en raison de l'entaille conjuguée (66).

11. Agencement de module solaire selon une des revendications 6 à 10, **caractérisé en ce qu'**au moins un premier joint (62) part de la région de bord latéral (61) qui - dans le cas de la présence d'un module solaire voisin (2) - repose sur son côté inférieur de sa languette de chevauchement (55).

12. Agencement de module solaire selon une des revendications précédentes, **caractérisé en ce qu'**au moins un second joint (64) part de la région de chevauchement (51) qui - dans le cas de la présence d'un module solaire voisin (2) - repose sur son côté inférieur de son entretoise de chevauchement (49).

13. Agencement de module solaire selon une des revendications précédentes, **caractérisé par** au moins quatre modules solaires (2) disposés en composé, avec au moins six éléments de fixation (7), au moins quatre éléments de maintien (6) et au moins une région d'une face de montage (39), dans lequel au moins deux modules solaires (2) sont à chaque fois disposés l'un à côté de l'autre sur le côté longitudinal et forment une rangée (3), et les au moins deux rangées (3) sont disposées l'une à côté de l'autre sur le côté frontal.

14. Agencement de module solaire selon une des revendications précédentes, **caractérisé par** la réalisation en tant que système intégré en toiture.

15. Procédé de création d'un agencement de module solaire selon une ou plusieurs des revendications précédentes, avec au moins un module solaire (2), au moins deux éléments de fixation (7), au moins un élément de maintien (6) et au moins une région d'une face de montage (39), dans lequel chacun des éléments de fixation (7) est pourvu d'au moins un logement enfichable (36) ainsi que d'une face d'appui (44) et l'élément de maintien (6) est pourvu d'au moins une saillie enfichable (37), dans lequel
- l'élément de maintien (6) est fixé sur le module solaire (2) dans la région d'un premier de ses côtés frontaux (4),
- un premier des éléments de fixation (7) est fixé à la face de montage (39) et un second des éléments de fixation (7) est également fixé à la face de montage (39) à distance du premier élément de fixation (7),
- le module solaire (2) est manipulé de telle sorte que la saillie enfichable (37) de l'élément de maintien (6) est enfichée dans le logement enfichable (36) du premier élément de fixation (7) en direction ou approximativement en direction de l'étendue de la face de montage (39),
- le module solaire (2) est notamment ensuite déposé sur la face d'appui (44) de l'autre élément de fixation (7) avec une région de côté inférieur (50) opposée au premier côté frontal (4), et
- le module solaire (2) est ensuite fixé, notamment vissé à fond, au second élément de fixation (7) et/ou à la face de montage (39) - éventuellement après de légères corrections de position du module solaire (2) par rapport à la face de montage (39).
